# EUROPEAN PATENT SPECIFICATION

(11) **EP 3 563 350 B1**
(45) Date of publication and mention of the grant of the patent: **21.10.2026**
(21) Application number: 17836061.6
(22) Date of filing: 29.12.2017
(51) Int. Cl.: G06T 15/04, G06T 17/00

(54) **METHOD AND DEVICE FOR A THREE-DIMENSIONAL MAPPING OF A PATIENT'S SKIN FOR SUPPORTING THE MELANOMA DIAGNOSIS**
VERFAHREN UND VORRICHTUNG ZUR DREIDIMENSIONALEN ABBILDUNG DER HAUT EINES PATIENTEN ZUR UNTERSTÜTZUNG DER MELANOMDIAGNOSE
PROCÉDÉ ET DISPOSITIF DE CARTOGRAPHIE TRIDIMENSIONNELLE DE LA PEAU D'UN PATIENT POUR LA PRISE EN CHARGE DU DIAGNOSTIC DU MÉLANOME

(30) Priority: 29.12.2016 IT 201600132357
(43) Date of publication of application: 06.11.2019
(73) Proprietor: Universita' Degli Studi Di Padova, 35122 Padova (IT)
(72) Inventor: GALGARO, Antonio, I-35122 Padova (IT); TEZA, Giordano, I-35122 Padova (IT)
(74) Representative: Chimini, Francesco
(86) International application number: PCT/IB2017/058515
(87) International publication number: WO 2018/122793

(56) References cited:
- WO-A1-2009/083973
- WO-A2-2006/003658
- WO-A2-2011/087807
- WO-A2-2016/032398
- US-A1- 2005 033 142

## Description

### Field of the invention

The present invention is related to a method and an apparatus intended to provide a three-dimensional geometric-chromatic-thermographic mapping of the entire skin of a patient, or of a skin portion, aimed at carrying out the automatic recognition of skin lesions, in particular lesions potentially related to malignant melanoma.

The technical field of the invention is Digital Medical Imaging (DMI) of skin neoformations by means of photogrammetric and thermographic methods.

### Description of the state of the art

In general, the DMI covers a wide range of technical means of data acquisition and processing which, under the condition of they are correctly interpreted by the doctor, are often decisive for the purpose of formulating a diagnosis. Recent developments in DMI not only improve the success rate of the diagnostic procedure, but may also offer new chances of cure for many diseases. Despite these significant developments, in some sectors, such as dermatology, the doctor still tends to visually study similarities and / or differences between the analyzed parts and often manually performs image segmentation (the used images can be visible images, thermographic images, radiographs, images from nuclear magnetic resonance, etc.). The results of such a qualitative image processing and analysis could be characterized by a high degree of subjectivity, errors and poor reliability.

For this reason, there are some issues still open, especially in the field of automatic or at least semi-automatic conversion of the large amount of available data in information that can be interpreted by the doctor and, therefore, is useful for diagnostic purposes.

Nowadays there is a close interconnection between DMI and remote sensing, in particular digital photogrammetry. Digital photogrammetry allows the reconstruction of the three-dimensional (3D) structure of an observed object from a series of images of the same area of this object taken from different points of view, leading to a high resolution photorealistic point cloud and/or a photorealistic digital model.

In general, the photogrammetric modeling is possible whenever at least two images of the same zone are taken simultaneously (under dynamic conditions) or at similar times (under static conditions) from different positions and in such a way to observe the same zone.

A recent development of digital photogrammetry, i.e. Structure-from-Motion (SfM) photogrammetry, allows a particularly fast and easy data acquisition and highly automated data processing, leading to results very similar to those obtainable by laser scanning.

The SfM technique is used, for example, in order to carry out automatic facial scanning and modeling for cinematographic uses, as described in US 7548272 B2.

The SfM technique seems to be particularly suitable for an effective 3D mapping of the skin, allowing both to map the moles in direct acquisition and to recognize, by measures repeated over time, any morphological variations of moles in size, thickness, and color. In this way, it is possible to evaluate the main indicators of potential melanoma such as: (1) asymmetry; (2) regularity of the edges; (3) color (polychromy); (4) size (with evaluation of critical thresholds); (5) evolution (modification of form, color and surface, evaluable following multitemporal observations); (6) elevation (in the case of nodular melanoma); (7) black sheep.

It should be noted that malignant melanoma is one of the main causes of death due to cancer disease. However, in the case of a timely diagnosis, nowadays survival to melanoma exceeds 90%. This highlights the importance of early diagnosis and therefore the need for an instrument that allows a periodic screening, especially in the case of potentially risky subjects.

There are examples of application of photogrammetry and, in general, of photographic techniques to mole observation and diagnostics. However, photographic methods are still not widely used in dermatological medical practice.

A limitation to the use of photographic methods is related to the image color normalization, which is aimed at allowing the comparison of the collected data with models available in a database.

An example of an industrial product that uses photographic techniques is based on laser scanning and projection of the photographic data on the 3D digital model thus obtained.

An industrial product for photogrammetry applied to dermatology is described in US 8849380 B2.

A common feature of all systems intended for cutaneous melanoma diagnostics and based on 3D geometric and color modeling is the complexity of the equipment, with the resulting high cost.

There are also well-known smartphone apps for automatic detection of moles and automatic comparison of the resulting data with available databases for the purposes of melanoma diagnosis. However, it should be noted that these simplified systems, which would tend to exclude the doctor from the diagnostic process with obvious consequences, are strongly opposed by the authorities that monitor the health of citizens.

In general, the systems proposed in Literature are not ready for a direct use by a doctor but require interventions by researchers and / or technicians in various stages of the procedures of data acquisition and processing.

Commercially available devices are also characterized by very high costs and are therefore difficult to apply in large contexts, for example in relatively small provincial hospitals, which would therefore be excluded from the large-scale screening activity for the detection of potential malignant melanomas. Relevant prior art documents include:
WO 2009/083973 A1 describing a system and method for registering medical imaging data (e.g. thermographic, ultrasound, X-ray) by mapping a tissue's surface contour in different deformation states and transforming imaging data accordingly to correct for tissue deformation;
WO 2006/003658 A2 disclosing a system and method for 3D thermographic imaging of a portion of the human body, combining thermographic and non-thermographic images into a spatial model to help detect tumors;
WO 2016/032398 A2 disclosing a method and device for analysing an image, in particular by extracting and using feature quantities to improve object detection or classification of melanoma.

### Summary of the invention

One object of this invention is, therefore, to propose a method and an apparatus intended for a 3D mapping of the patient's skin, characterized by high precision and reliability, but also having an accessible cost for any healthcare system.

This object is achieved by means of a mapping method according to claim 1 and with an apparatus according to claim 13. The dependent claims describe preferred embodiments of the invention.

The present invention relates to both a method based on digital medical imaging (DMI) for the acquisition and automatic processing of images, and a specific apparatus capable of providing a 3D digital model textured both in visible band (RGB) and in thermal infrared band (IRT).

The proposed method and apparatus are able to provide a 3D mapping of the skin according to two possible approaches:
- in direct acquisition, aimed at obtaining data related to the morphological characteristics, size, color and thermal response of a skin lesion, in order to allow comparison of these data with a database of diagnostic indices; or
- by means of measures repeated over time, aimed at detecting any morphological, dimensional, chromatic and thermal response variations of moles that can be related to possible malignant melanomas.

In both the cases, the method and the equipment are designed to recognize the main indicators of potential melanoma such as: asymmetry, border regularity, color (polychrome), size (with evaluation of critical thresholds), elevation (in the case of nodular melanoma), black sheep (from specific chromatic analysis devoted to recognition of moles significantly darker than the surrounding skin and /or darker than the other moles), temperature contrast with respect to the surrounding skin (in the case of thermographic measurements of static type) or time constant of temperature decay after a thermal stimulus (in the case of dynamic thermographic measurements), and, in the case of multitemporal observations, evolution, i.e. changes of shape, color, size and surface pattern.

According to the invention, the mapping method comprises the steps of:
- receiving a plurality of photographic images and thermographic images of the portion of skin to be mapped;
- performing a photogrammetric modeling of the photographic images in order to generate a photorealistic point cloud and a photorealistic 3D model of the observed skin portion;
- performing a thermographic data elaboration on the data coming from the thermographic images and from the photorealistic point cloud, in order to associate thermal data to every point of the photorealistic point cloud;
- combining the photorealistic 3D model with the photorealistic point cloud provided with thermal data, in order to generate a photorealistic 3D model provided with thermal data.

In one embodiment, the photorealistic point cloud and the photorealistic 3D model are obtained by associating to each point of the point cloud and to each graphic element of the 3D model the corresponding color data in visible band, based e.g. on the colors red, green, blue (RGB). The thermal information is temperature data in the thermal infrared band (IRT).

In one embodiment, the thermal information represents the difference between the temperature of a point belonging to a skin lesion and the temperature of an area outside this skin lesion.

In a variant embodiment, the thermal information also comprises the time constant of the temperature decay after the application of a thermal stimulus to the area affected by skin lesions.

In one embodiment, the photorealistic 3D model provided with thermal data is subjected to a segmentation step aimed at recognizing all the moles in the observed skin portion. In this segmentation stage, the V (Value) channel of the HSV coding of the color of the photorealistic point cloud is used.

For each recognized mole, at least some, preferably all, diagnostic indexes are calculated. These indices are chosen from the following ones: asymmetry index, *I_{A}*; edge regularity index, *I_{RB}*; color index, *I_{C}*; size index, *I_{D}*; elevation index, *I_{E}*; black sheep index, *I_{BS}*; thermographic index, *I_{T}*.

The apparatus aimed at performing a three-dimensional mapping of a portion of a patient's skin comprises:
- a mobile photographic unit, MPU, comprising a plurality of digital cameras operating in visible band and positioned so as to scan all the exposed side of the patient;
- at least one thermal camera;
- lighting lamps arranged in positions such as to guarantee a diffused light; and
- a command and control unit, CCU, suitable for receiving data from the MPU and the thermal camera and programmed in order to implement the above described mapping method.

In one embodiment, the MPU has a substantially semicircular shape with a vertical axis.

Preferably, the MPU is movable in height along a vertical guide in order to carry out a scan of the portion of skin to be mapped. The actual height of the MPU at the time of each image acquisition is acquired and transmitted to the command and control unit.

Preferably, the MPU vertical guide can be moved along a circular guide having vertical axis in order to allow the rotation of this MPU around the patient.

Thus, in a preferred embodiment, the mapping method is based on:
- acquisition of photographic and thermographic data;
- photogrammetric modeling, to give a 3D digital model textured with visible data;
- chromatic normalization of data in visible band on the basis of the characteristics of the patient's skin and lighting conditions;
- fusion of color and thermal data, to give a digital model also textured with thermal data;
- segmentation of the textured models (namely a partitioning of the 3D models into multiple segments leading to a recognition of the significant regions for diagnostic purposes, i.e. the moles, and their characterization), and subsequent estimation of the diagnostic indices of melanoma;
- comparison between the computed melanoma indices and an available database of melanoma indices.

In the case of multitemporal data acquisitions, comparisons with the data obtained in the previous measurement sessions are carried out, in order to recognize and evaluate possible variations.

It is emphasized that the mapping of the skin obtained in this way shall always be used by a doctor. This means that a doctor will always be at the center of the diagnostic process. The proposed method and apparatus are therefore diagnostic support systems. Furthermore, the doctor will be able to choose between automatic, semi-automatic and manual segmentation / classification of the moles.

In a preferred embodiment, the apparatus comprises a semicircular horizontal element, having e.g. a radius of 1 m, called Mobile Photographic Unit (MPU), on which some cameras operating in visible band are positioned (e.g. 10 - 18 cameras, arranged on 2 or 3 levels), a thermal camera and some lighting lamps to guarantee a diffused light (for example 8-10 lamps). This semicircular element will allow the acquisition and the photogrammetric modeling of a portion of the height of about 40 cm of the exposed side of the patient's body (the patient will be standing if the entire body is scanned, sitting if the back and / or chest is scanned instead).

The apparatus is also provided with a vertical U-shaped guide, having e.g. a height of about 2.2 m, along which the MPU can slide in order to scan an entire side of the patient, and a horizontal, circular rail, for example having 1 m radius, along which the guide can move in order to scan both sides of the patient.

The equipment is managed by a command and control unit, CCU, which includes the logic of photogrammetric processing and which is equipped with a graphical user interface (GUI) for the management of the entire measurement session: planning, execution, data processing, visualization, saving and eventual transmission of the results to allow remote diagnosis, as well as for the possible treatment of images of different origins and the fusion of the corresponding models with the one from images taken in visible band.

In one embodiment, the MPU and the vertical U-guide are motorized, with selectable positions, in particular pre-definable positions according to the type of diagnostic test to be performed. Furthermore, a manual positioning on MPU is also possible.

The typical spatial resolution of a professional camera for a 1 m acquisition distance can reach about 0.12 mm. Taking into account the typical performances of photogrammetric modeling, the fact that a significant oversampling is expected (each area will be acquired from several positions) and the fact that the procedures will be optimized on the typical acquisition distance for the moles, a reasonable estimate of the resolution of the obtained models is around 0.2 mm.

The proposed apparatus is easy to use and relatively low cost; it will be able to provide the doctor with quantitative data of great quality and significance for the purpose of carrying out a first screening aimed at recognizing possible cutaneous malignant melanoma. In particular, the model will be interfaceable online and offline with the data provided by other diagnostic systems thanks to the DICOM format of the output data.

Innovatively, the proposed skin mapping method and apparatus are based on a fusion of visible band and infrared thermal band data, to give a 3D model textured with visible and thermal information. The thermal information can be obtained under static conditions, i.e. the temperature pattern contextual to the acquisition of images in visible band is acquired, or in dynamic conditions, i.e. a sequence of thermal images is taken during the cooling stage subsequent to the application a thermal stimulus.

Innovatively, a combined and efficient use of geometric, chromatic and thermal data is proposed, so as to provide the positions of the recognized moles, in a convenient reference frame, as well as the corresponding main morphological, chromatic, and thermal response characteristics.

It should be noted that the proposed mapping system is completely autonomous and can be directly used by the doctor through the graphical user interface (GUI).

Although the proposed system is an autonomous diagnostic support system, it can be interfaced with other diagnostic systems, both online (therefore in real time, possibly also for remote diagnosis purposes), and offline.

The overall diagnostic support system, although characterized by high performance, has a foreseeable cost that can easily be addressed by any healthcare system.

The proposed method and apparatus are therefore designed for a wide use dedicated to the diagnosis of malignant melanoma, with particular reference to the usability for both a first screening and a periodic control.

### Brief description of the figures

Further details and advantages of the proposed method and the apparatus for the three-dimensional mapping of a portion of a patient's skin will be apparent from the detailed description of their preferred embodiments, indicative and not limitative, provided with reference to the attached drawings, in which:
- Figure 1 is a flowchart of the mapping method according to the invention in the case of a single data acquisition aimed at recognizing possible malignant melanomas; the functional blocks contained in the area delimited by the dotted line are part of the method and can be implemented with the proposed equipment, while the additional actions outside this area, related to the remaining blocks, are implemented by the doctor or are carried out on the basis of doctor's recommendation;
- Figure 2 is a flowchart of the single block of normalization and homogenization of the color of the point cloud and of chromatic texturing of the 3D model;
- Figure 3 is a the flowchart of the thermographic data block only;

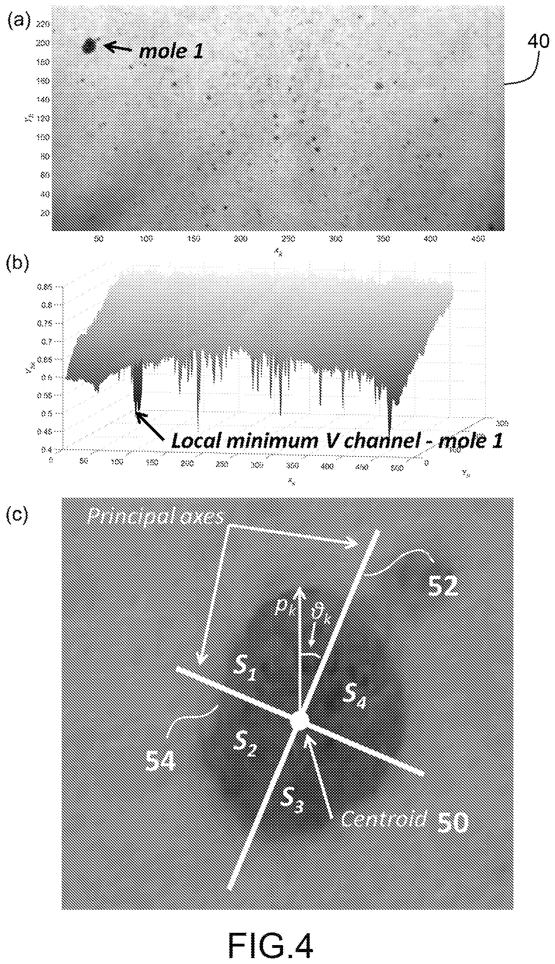

- Figure 4 shows in detail the block of segmentation and recognition of moles: (a) 2D view of the 2.5D model of an area characterized by the presence of several moles (the values of abscissas and ordinates are pixel indexes), with original color (in this case in gray levels), in which the "mole 1" is highlighted; (b) view of the 2.5D model, in which the punctual value of the V channel of the HSV color coding (H: hue, S: saturation, V: value) is expressed as a function of the position (*xₖ*, *yₕ*) on the reference grid. It should be noted that the moles are associated with local minima of V (the local minimum related to "mole 1" is highlighted in this figure); (c) calculation of the symmetry index and edge regularity index for the "mole 1": main axes, centroid and parameters for the calculation;
- Figure 5 is a flowchart of the mapping method in the case of multiple acquisitions repeated over time in order to evaluate the evolution of suspicious melanoma or moles degenerated in melanoma. For each data acquisition, the input data are obtained with the direct acquisition method illustrated in Figure 1;
- Figure 6 is a schematic representation of the apparatus conceived in order to implement the mapping method;
- Figure 7 shows an example of successive positioning of the center of mass of the mobile photographic unit of the apparatus for the acquisition of the whole body of a patient whose height is about 1.60-1.70 m (21 overall positions);
- Figure 8 is an example of photogrammetric survey of a voluntary patient, in which figure 8a is a representation of the model of the studied area as an orthophoto referred to a vertical plane, Figure 8b is an area of the patient's back selected for the mole search, on which the areas characterized by pigmentation and / or different elevation with respect to the rest of the skin are highlighted, and Figure 8c is a detail of a mole (seen from above and from a side), where its shape and some characteristic size data are highlighted.

### Definitions

In the rest of the description the following technical terms will be used:
- 2.5D model: digital model of an object represented as a set of z coordinates expressed with respect to a xy plane where the x and *y* coordinates are generally defined according to a regular grid, i.e. it is *zₕₖ* = *z*(*xₖ, yₕ*) with *xₖ* = *x*₀ + Δ*k* and *yₕ* = *y₀ +* Δ*h,* where (*x₀, y₀*) is the reference vertex of the lattice and Δ is the corresponding step (typically equal for the two directions);
- 3D model: digital model of a 3D object. In the specific case, it is assumed that this is a digital surface model represented by a triangular mesh;
- CCU: Command and Control Unit of the proposed diagnostic system;
- DICOM (Digital Imaging and COmmunications in Medicine): a standard that defines the criteria for communication, visualization, archiving and printing of biomedical information such as photographic and radiological images, commonly used in the DMI;
- DITI (Digital Infrared Thermal Imaging): digital thermography (acronym generally used for thermography in DMI) ;
- DMI: Digital Medical Imaging;
- Dynamic thermographic measurement: acquisition of the evolution of the temperature pattern of an area of a body (in the specific case: a portion of the patient's skin) performed by means of a series of thermal images taken during the thermal transient following a thermal stimulus. Such a measurement is aimed at recognizing any areas characterized by anomalous cooling. During a dynamic thermographic measure, the MPU will remain stationary;
- GigE: standard for piloting and data transmission interfaces of high performance industrial cameras;
- GUI (Graphical User Interface): it is a type of user interface that allows the user to interact with electronic devices through graphic icons and visual indicators;
- HSV (Hue, Saturation, Value): additive color model in which the parameters are the hue (H), saturation (S) and value (V);
- IPC (Image from point cloud): image obtained by projecting a point cloud on a plane from a defined point of view;
- IPCTT (thermal textured IPC): IPC textured with thermal data provided by a thermal image;
- IRT: thermal infrared band (wavelength in the range 1.4-15 µm). It includes the SWIR (Short Wavelength Infrared) band, from 1.4 to 3 µm, MWIR (Mid WIR) band, from 3 to 8 µm and finally, LWIR (Long WIR) band, from 8 to 15 µm. LWIR is the most used band in DITI;
- LOS (Line-of-Sight): it is the straight line optical path between transmitter and receiver device. In the case of an instrument, it is then optical path between the instrument and the observed target;
- Melanoma (or malignant melanoma): malignant tumor derived from melanocytic cells, usually cutaneous cells;
- Metadata: information on data sets. In particular, photographic metadata (focal distance, aperture, integration time, sensor characteristics, ...) are typically associated with digital image files;
- Mole: circumscribed tissue malformation. It is due to a germinative anomaly or a development anomaly. A healthy mole has no an evolutionary character;
- MPU: Mobile Photographic Unit of the proposed diagnostic system;
- Multitemporal (term referred to measurements): series of measurements carried out repeatedly over time. In case of DMI, multitemporal measurements are carried out with intervals generally established by specific guidelines;
- Orthophoto: orthorectified image, i.e. a geometrically corrected image;
- Patient: in the specific case, either a person medically examined within a screening aimed at diagnosing melanoma, or a person medically examined one-time or periodically for the same type of diagnosis;
- Photorealistic (term referred to a point cloud or a 3D model): property of a 3D object whose color data are as close as possible to photographic reproduction, therefore characterized by real colors. In the case of a point cloud, these color data are the point colors; in the case of a digital model, they are the textures of geometric elements (e.g. triangles of a triangular mesh) ;
- Point cloud: a set of 3D points characterized by their position in a coordinate system and by any intensity values (color, depth, ...);
- Polygonal mesh: set of vertices, edges and faces that define the shape of an object tessellated by polyhedral (typically triangles);
- Python: high-level object-oriented programming language, suitable, among other uses, for development of distributed applications, scripting, numerical computation and system testing;
- Registration, or alignment, or co-registration (of two or more images, of two or more models) : process aimed at transforming different data sets defined in different reference systems into data sets defined in the same reference frame;
- RGB: additive color model based on the colors red (R), green (G) and blue (B);
- Screening: health check performed on a population or on individual groups or categories to allow an early diagnosis of certain diseases and morbid conditions. In this specific case, a screening is aimed at diagnosing malignant melanoma or other pathological conditions of the skin;
- Segmentation (of an image or a digital model): process of subdivision of the image or of the model into multiple parts, generally aimed at recognizing objects or evaluating other significant information;
- SfM: Structure-from-Motion photogrammetry;
- Static thermographic measurement: acquisition of the temperature pattern of an object (in the specific case of the skin) performed by means of a single thermal image taken contextually to a photographic acquisition;
- SVM (Support Vector Machine): it is a supervised learning system for regression and classification of data;
- Texture (of a digital model): additional information, with respect to the geometric one, associated to each element of the model (each triangle in the case of a triangular mesh), related e.g. to color (RGB or HSV channels), thermal data, or other kind of information;
- Texturing (of a digital model): attribution or completion of a texture to the elements of the model. By extension, if an image is conceived as a 2.5D model in which the *zₕₖ* elevations are the intensities *Iₕₖ*, texturing is the generation of an image in which one or more additional channels are added to the intensity channel (three intensity channels in the case of a color image);
- Thermal image: image in gray levels accompanied by the information necessary to allow the representation of a temperature pattern, in particular the law that links temperatures and gray levels. This additional information is stored as a metadata in the image file;
- Thermal imaging camera, or thermographic camera: digital camera, operating in IRT band, able to provide the surface temperature pattern of a body from the electromagnetic radiation emitted by it;
- Touch screen: device that allows the user to interact with the GUI directly on the screen through fingers or particular objects;

### Detailed description of a preferred embodiment of the invention

A method and an apparatus for the acquisition and automatic processing of images are proposed. Later on in this description, they will also be collectively defined with the term "system". The system is able to provide a 3D digital model textured in visible (RGB) band and thermal infrared (IRT) band aimed at performing a 3D mapping of a patient's skin portion. In particular,
- in a direct acquisition, i.e. in the case of a single visit, the system will recognize the moles potentially associated with malignant melanoma by comparing the obtained results with a database of colorimetric, geometric and thermal diagnostic indices;
- in the case of repeated measurements over time, the system will recognize any morphological variations of the moles in thickness and size, as well as any variations in color and thermal response of these skin lesions.

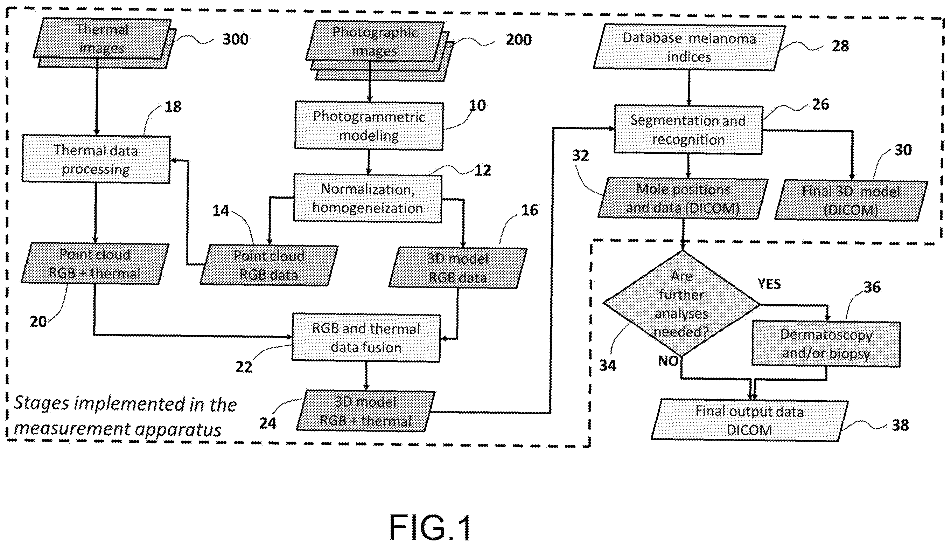

The method of skin mapping according to the invention, in the case of a single acquisition, is described with reference to Figure 1.

It should be noted that, in a preferred embodiment, the output data are in the DICOM format, universally used for the management of DMI data, and therefore can be used by other doctors. Given that, according to the usual convention, the functional blocks representing actions or functions are indicated with rectangles, and those that represent data are indicated with parallelograms, in Fig. 1 the following blocks are represented:
- Photogrammetric modeling block 10. It receives the photographic images 200 provided by the MPU (mobile photographic unit, described below) and generates a photorealistic point cloud that represents the area that the doctor wants to study. Regardless to the acquisition mode chosen by the doctor, i.e. completely automatic (in this case, the MPU, automatically moves to reach the predefined positions and acquires the necessary images), or manual (the doctor manually positions the MPU to acquire the area that he / she intends to study), the positions taken by the cameras are automatically saved and used for image registration and bundle adjustment.

The photogrammetric modeling block 10 also provides, as output data, the 3D model textured with data in visible band.

The photogrammetric modeling process is implemented through commercial software (for example PhotoScan by Agisoft or RhinoPhoto), or through open source software (for example, Python Photogrammetry Toolbox).
- Block of normalization and homogenization of the data in visible band 12. It receives the 3D point cloud with data in visible band and provides as outputs the point cloud 14 and the 3D model 16 with color data normalized and homogenized. The process is aimed at providing data whose chromatic values are always comparable to each other, so that any chromatic differences are due only to actual differences in the observed details and not to the specific observation conditions of certain areas of the patient's body with respect to others areas.

The normalization and homogenization method is implemented e.g. in MATLAB and / or in Python. The process is greatly simplified thanks to the adoption of a series of lamps that provide a substantially homogeneous lighting.

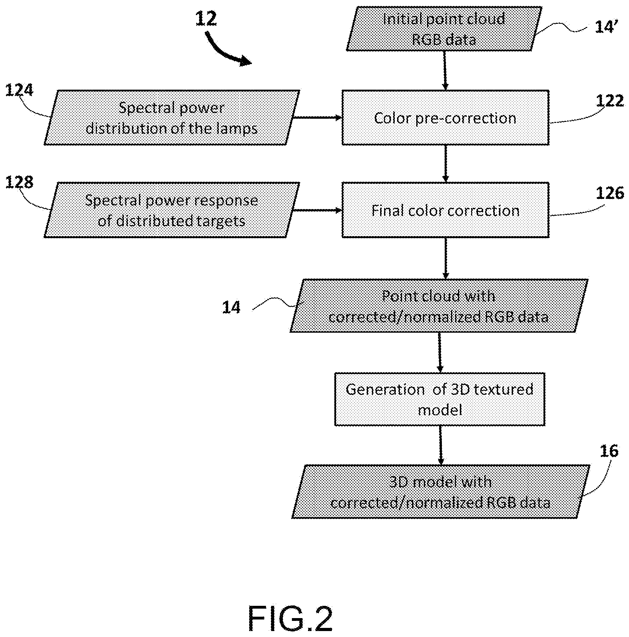

An embodiment of the normalization and homogenization block 12 is described in the flowchart of Figure 2.

Substantially, the normalization / homogenization of the color data of the initial RGB point cloud 14', is automatically carried out by means of:
- a color pre-correction 122 based on the spectral power distribution of the used lighting lamps 124;
- a final color correction 126, based on the color associated with small artificial targets of known spectral response 128 (indicatively 4 targets), placed by the doctor on the skin surface in well distributed positions with respect to the skin portion to be studied.

The color pre-correction 122 is intended to ensure mutual comparability of data obtained in the same observation session for different regions of the patient's body.

The final correction 126 is intended to ensure comparability between the color data related to measurement sessions performed at different times (i.e. multitemporal measurements). As shown in Fig. 2, after the execution of the normalization and homogenization operations on the color data, the block generates the metric point cloud 14 and the photorealistic 3D model 16 of the area to be studied.
- Thermographic data processing block 18, which receives at the input the thermographic images 300 generated by the thermal camera and the photogrammetric point cloud 14. The output of this block is the point cloud with, in addition, the temperature data (block 20).

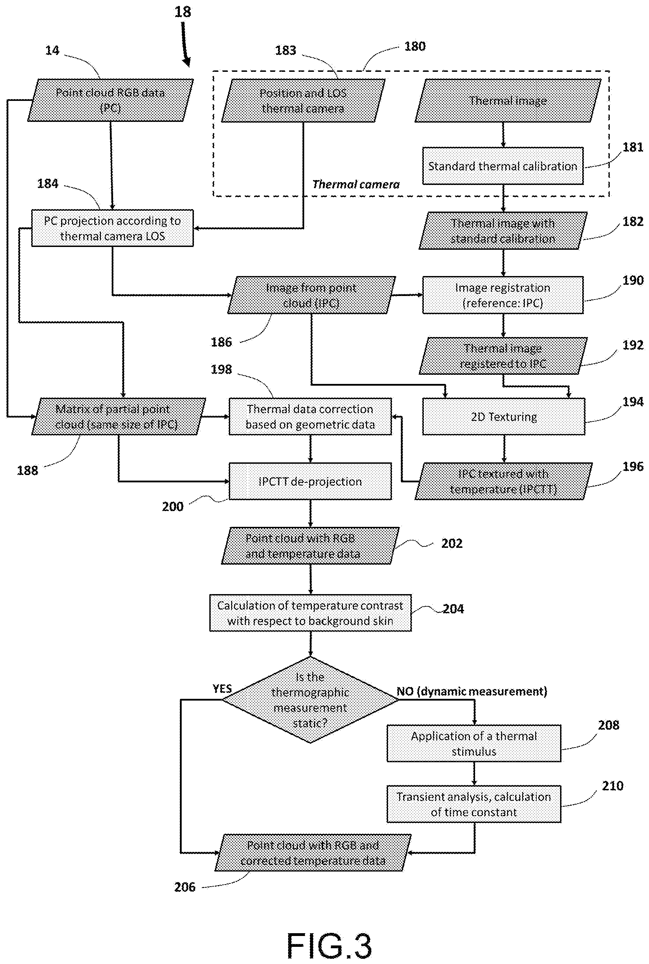

One embodiment of the thermographic data processing block 18 is described with reference to the flowchart of Figure 3.

The operations performed by this block are:
- acquisition of data from the thermographic camera 180 and transformation of them into a thermal image 182, for example a matrix of 16-bit gray levels (65535 levels) associated with the temperatures measured by a linear law of the type *Tᵢⱼ =T*ₘᵢₙ *+* (*Tₘₐₓ*-*Tₘᵢₙ*)*Iᵢⱼ*/65535, where *Iᵢⱼ* is the intensity related to the pixel ij, *Tᵢⱼ* is the corresponding temperature in kelvin and *T*ₘᵢₙ and *T*ₘₐₓ are respectively the minimum and the maximum detected temperature. These gray levels, and therefore the corresponding temperatures, are previously corrected on the basis of the standard thermal calibration parameters 181, i.e. through a standard procedure of thermal calibration in 2D implemented with software provided by the camera manufacturer;
- 2D projection 184 of the point cloud 14 according to the line of sight (LOS) 183 of the thermal camera 180, to give:
   - an RGB image 186 that corresponds to the visible band image of the observed subject that would be obtained by means of an RGB camera with the same point of view and the same orientation of the thermal camera and whose color levels are those of the points of the projected point cloud. This image is called IPC (Image from Point Cloud) and will have an *MxN* size based on the physical dimensions of the observed skin portion;
   - a matrix of partial point clouds, MPC, 188, also having *MxN* size, such that *MPCₕₖ* consists of all the points of the initial point cloud that are projected onto the same pixel hk of the IPC image. This second variable has the purpose of allowing the subsequent de-projection of the image;
- 2D co-registration 190 of the thermal image and IPC, so that each pixel of the resulting thermal image 192 has the same position, in the IPC reference system, of the area to which it corresponds. Ideally, the correspondence should be pixel to pixel, but it should be kept in mind that the current technological constraints preclude the creation of IRT sensors (in particular, sensors in the LWIR band) of the same size of those of the visible band cameras;
- subsequent IPC texturing, 194, carried out on the basis of thermal data. For the pixel hk of IPC the value, if it exists, of the corresponding pixel of the thermal image is assigned to *IPCₕₖ* (the correspondence between the two images is a function whose domain is the set of IPC pixels but which, in general, is neither injective, nor surjective). The output data is the IPC image textured with thermal data 196, labelled with IPCTT;
- thermal recalibration 198 of the IPCTT image, to be implemented on the basis of:
   - mutual orientation of the thermal camera and of the observed surface portion, in order to locally correct the temperature values on the basis of the angle between the thermal camera LOS and the normal direction to the surface itself (typically, for angles above 40° the detected temperature depends on the angle, i.e. the value shown by the camera is not real and must be corrected accordingly);
   - actual distance between the thermal camera and the aforementioned portion of the surface.

These corrections allow to obtain an IPCTT having the true temperature values, therefore exceeding the limits of the standard thermal calibration. These corrections are implemented, in a fully automatic and computationally efficient way, thanks to the availability of the partial point cloud matrix, MPC, which basically allows to operate as in the case of an organized point cloud;
- De-projection 200 of the thermally recalibrated IPCTT image, to give the final point cloud 202 with the thermal data.

According to an embodiment, the thermal recalibration stage of the temperature matrix, or thermal image 182, obtained for each observation with the thermal imaging camera, comprises the sub-stages of:
- searching, for each pixel of the temperature matrix, the corresponding area of the point cloud;
- locally modeling this area of the point cloud, and possibly a surrounding area within a predetermined radius, to obtain the local normal unit vector of the observed area;
- computing the angle between the direction of the local normal unit vector and the thermal camera LOS and then correcting the emissivity for the specific pixel based on this angle;
- computing the distance between the thermal imager and the observed area.

In one embodiment, this recalibration step is performed using the emissivity value of each pixel and the corresponding distance between the thermal camera and the observed surface as corrective factors to be applied to the equations provided by the camera manufacturer. These equations link the 16-bit integer array provided by the thermal camera, called "Raw thermal image", the physical characteristics of the environment and the observed material, and the conditions of observation to the actual temperature of the observed surface portion.

As shown in Fig. 3, it is possible to distinguish between two cases:
- static thermographic survey. In this case, the thermal information for each point is the thermal contrast 204, also called temperature contrast, i.e. the difference in temperature between the considered skin feature (the mole) and the background skin non affected by moles. In particular, let <T> be the spatial average of the background skin temperature. The thermal contrast at the point whose coordinates in the used specific reference frame are (x,y,z) is defined as *TC*(*x,y,z*) = *T*(*x,y,z*) *- <T>.* Thus a point cloud with 4-level intensity data (RGB data and temperature contrast), 206, is obtained;
- dynamic thermographic survey. In this case, the thermal information for each point is, in addition to the above described temperature contrast, the time constant of the temperature decay obtained during the thermal transient following a thermal stimulus applied to the patient's skin for each position of the MPU (block 208). In particular, let *T_{S}* and *T_{I}* be the temperature of the mole at the moment of application of the thermal stimulus and the temperature of the undisturbed mole respectively. The average temperature of the mole at the time t in the recovery stage of the initial temperature is *T*(*t*)*=T_{I} +*(*T_{S}* -*T_{I}*)exp{-(*t*-*t_{S}*)/τ}, where ts is the time of application of the stimulus and *τ* is the time constant to be calculated. Indicatively, a thermal stimulus of 3-5 K is applied for a time of about 20-30 s. Clearly, a stimulus is applied to the skin for each position of the MPU. It should also be noted that, since the analysis has an areal character (i.e., for a given time, the average temperature of the mole area is measured), possible small movements of the patient during the cooling stage (due, e.g., to breathing) do not significantly act on the estimated time constant. Therefore, the point cloud 206 is obtained. It has intensity data on 5 levels: RGB data, temperature contrast before the application of the thermal stimulus and time constant 210 of the temperature decay.

The dynamic approach can provide results of greater diagnostic effectiveness but requires a longer observation time (some minutes for the series of acquisitions during the thermal transient instead of a few seconds for the thermal calibration process).

The flowchart shown in Figure 1 is now further discussed. The block 22 for fusion of the data in visible band and IRT band receives at its input the 3D model 16 and the point cloud provided with the thermal data 206. This data fusion block 22 provides at its output the 3D model textured with data in visible band and IRT 24. Similarly to the case of the point cloud, the texture of the model 24 has 4 levels in the case of static thermographic measurements (RGB color and contrast temperature compared to the background) and 5 levels in the case of dynamic thermographic measurements (RGB color, temperature contrast and time constant of the temperature decay after the application of the thermal stimulus).

In one embodiment, the 3D model 24 generated by the data fusion stage 22 is subjected to a process of model segmentation and recognition of the moles potentially associated with malignant melanoma, 26. The input data of the segmentation block 26 are, therefore, the 3D model textured 24 and the database of melanoma indices 28.

The segmentation and recognition block 26 generates the following output data, for example in DICOM format:
- the final 3D model of the textured skin 30 with two additional levels: moles and suspicious moles (mole level: 1 if an element corresponds to a mole, 0 otherwise; suspicious mole level: 1 if an element corresponds to a mole that could be affected by malignant melanoma, 0 otherwise);
- a set of positions and data that characterize the recognized suspicious moles, 32.

In a preferred embodiment, this set of positions and data 32 comprises, for each suspicious mole:
- a local 2.5D model of the suspicious mole, textured with data in the visual band and IRT (temperature contrast and possible time constant), completed with position and orientation of the reference plane of the model itself in order to allow possible comparisons with future data;
- the values of the following diagnostic indicators, which justify the classification of the mole as melanoma:
   - asymmetry index, *I_{A}*;
   - regularity of borders index, *I_{RB}*;
   - color index, *I_{C}*;
   - size index, *I_{D}*;
   - elevation index, *I_{E}*;
   - black sheep index, *I_{ES}*;
   - thermographic index, *I_{T}*.

In general, a diagnostic index has a zero value for an unsuspicious mole (regarding to this specific diagnostic index), value 1 for a significantly suspicious mole and intermediate values for intermediate conditions of suspicious mole. Therefore, the process provides a vector of diagnostic indices (or diagnostic indicators) I*=*[*I_{A},I_{RB},I_{C},I_{D},I_{E},I_{BS},I_{T}*]*.*

The segmentation and recognition process 26 is aimed at recognizing all the moles present in the studied area and at evaluating the corresponding diagnostic indices, highlighting the moles that could be affected by malignant melanoma ("suspicious moles"). In particular, the block performs the following operations:
- Initial segmentation of the model and recognition of all the moles in the studied area. The search is performed in a completely automatic way by using the V channel (value) of the HSV coding of the point cloud color, where the moles appear very clearly as areas of local minima of V, i.e. they have V values significantly lower than that of the local background (i.e. the skin unaffected by moles). Assuming that the area to be studied is represented by a 2.5D model with RGB color, where the *zₕₖ* elevation and the RGB*ₕₖ* color vector depend on *xₖ* and *yₖ* defined on a regular grid, the HSV*ₕₖ* vector is computed. In this way, the punctual 2.5D model *Vₕₖ* = *Vₕₖ*(*xₖ*,*yₕ*) is obtained. Figure 4a shows a portion of skin 40 characterized by several moles, in which a particular mole is labelled with "mole 1". Figure 4b represents the corresponding punctual 2.5D model of the V component, where this mole appears as an area of clear local minimum. The 2.5D model which locally represents V is obtained by fitting an algebraic (quadratic or cubic) surface to the *Vₕₖ* values in a least squares approach. The moles are recognized as areas characterized by the condition *Vₕₖ < V_{hk,FIT} -2*σ*ₖ*, where *Vₕₖ* is the value at a point belonging to the mole, *V_{hk,FIT}* is the value that corresponds to the modeled surface and σ*ₖ* is the local dispersion of the V parameter. It should be noted that the mole recognition uses chromatic data only;
- calculation of the above listed diagnostic indexes, leading to the diagnostic index vector I*=*[*I_{A},I_{RB},I_{C},I_{D},I_{E},I_{BS},I_{T}*]. Also this calculation is carried out in a completely automatic way. Moreover, it should be noted that this calculation makes use of all the available information (geometric, chromatic and thermal information). In particular, the diagnostic indices are calculated as follows:
- asymmetry index. This index is important because an asymmetric mole is a melanoma candidate. The index is obtained by identifying the centroid 50 of the mole and determining, by means of diagonalization of the correlation matrix of the positions of the points constituting the mole itself, the corresponding principal axes 52, 54 (Figure 4c). The asymmetry is calculated by evaluating the differences between the areas corresponding to the 4 quadrants thus obtained. Let *Sᵢ* be the area of the i-th quadrant (*i=*1,2,3,4)*.* The differences between the quadrant areas, normalized to the total area of the mole, S, are Δ*ᵢⱼ* =|*Sᵢ -Sⱼ*|/*S*. The asymmetry index, *I_{A}*, is the sum of the differences Δ*ᵢⱼ*, which is zero in the case of a perfectly symmetrical mole and is equal to 1, with a standard deviation of 0.4, in the case of a generic mole completely devoid of any form of symmetry;
- index of edge regularity. This index is important because an irregular mole is candidate melanoma and is calculated using the centroid 50 and the main axes 52, 54 of the mole already computed for the evaluation of the asymmetry index. The whole circle angle around the centroid, starting from the half major axis 52, is subdivided into the N values *θₙ* =360n/N, with *n*=0,1,···,*N*-1. Let *Rₙ* be the radius of the circumference *Γn* adapted, by means of least squares procedure, to the 2M+1 edge points of the mole having the polar coordinates (*θₖ,pₖ*), with *k=n-M,n-M+*1,···*,n+M*, where *pₖ=p*(*θₖ*) is the distance between the centroid 50 and the edge of the mole corresponding to the angle *θₖ* (Fig. 4.c). Indicatively, N *=* 20-30 and *M* = 2-4 can be used. The edge regularity index is defined as ${I}_{RB} = \sqrt{{\sum }_{n = 0}^{N - 1} {\sum }_{k = n - M}^{n + M} {\left({p}_{k}/{R}_{k}-1\right)}^{2}} / N$. Therefore, it is the normalized root mean squared difference between the mole edge and the circumference locally fitted to the data. The index is zero in the case of a mole characterized by a regular edge and 1 for a mole whose edge is strongly jagged;
- color index (polychromy). This index is important because a nevus which simultaneously shows different colors is a melanoma candidate. The mole surface is represented by a local model 2.5D *{* (*xₖ*,*yₖ*,*zₕₖ*,RGB*ₕₖ*)}, where z*ₕₖ* = z(*xₖ,yₕ*) is the elevation and RGB*ₕₖ* = RGB(*xₖ*,*yₕ*) is the color of the element hk of the grid defined on a plane parallel to the local average arrangement of the skin. Let is considered the RGB image whose pixel hk has the value of the vector RGB*ₕₖ* of this 2.5D model (obviously, the image size in pixels is the same of the model grid). In order to compute the color index, at first the RGB image is transformed into an indexed image, i.e. a gray level image with the same of the starting image but with n possible levels (indicatively, n = 8-12), which contains the radiometric information, and subsequent evaluation of the statistical distribution of the levels themselves. The color index, *I_{C}*, is defined as zero if this distribution is unimodal (condition that corresponds to non-suspicious moles, i.e. moles unlikely affected by melanoma), is defined as 0.5 if the distribution is bimodal (moderately suspicious moles) and, finally, is defined as 1 if the distribution is multimodal with three or more modes (such a condition is related to strongly suspicious moles);
- size index. The mole size is expressed by its equivalent radius $R = \sqrt{S / π}$, where *S* is the mole area. The size index, *I_{D}*, comes from the comparison with the distribution of the size of recognized moles. In particular, it is 0 (non-suspicious mole) for a mole with a radius not greater than 1-1.5 mm, or in any case not higher than the average of the distribution of equivalent mole radii, while it is 1 (strongly suspicious mole) for a mole whose equivalent radius is greater than 3 mm or, in any case, for a mole whose equivalent radius is significantly higher than the average of the mole radii (the significance threshold is *µ* + 2σ, where *µ* is the mean and σ is the standard deviation of the distribution of equivalent rays);
- elevation index. This index takes into account the mole elevation with respect to the background skin and, in particular, the variation of such an elevation within a mole, which are factors that characterize a nodular melanoma. The elevation index, *I_{E}*, is zero for a mole having zero elevation, while it is defined as 1 for a mole having a significant thickness or characterized by significant spatial variations of elevation. Threshold of significance, mean and standard deviation of the distribution of mole elevations are computed in a similar way to that implemented in the case of size index;
- black sheep index. This index is obtained by means of a specific chromatic analysis aimed at recognizing the cutaneous formations of a color that is significantly darker than the surrounding area or other moles. The black sheep index is calculated by comparison of all the moles. In particular, the black sheep index, *I_{BS}*, is defined as zero if the mole has color in the mean (taking into account the statistical dispersion of the values), while it is defined as equal to 1 if the mole is significantly darker than the mean of the recognized moles;
- thermographic index. This index is obtained from the contrast of temperature with respect to the surrounding skin (in the case of static thermographic measurements) or from the time constant of temperature decay as a result of thermal stimulation (in the case of dynamic measurements). The used thermal parameter is obtained in the way depicted in the description of the thermographic data processing block 18 provided above. If the thermal information is the temperature contrast, the thermographic index, *I_{T}*, takes into account the fact that a suspicious mole should have a temperature greater by 2-3 K than the one of the surrounding skin. If the thermal information also includes the time constant, the thermographic index takes into account the difference in thermal recovery with respect to both the undisturbed skin and the average distribution of the recognized moles.

The described diagnostic indices can be calculated by means of appropriate codes written in MATLAB and / or Python. It is emphasized that the evolution of diagnostic practice can lead not only to the redefinition of the thresholds, but also to the introduction of new indices. Some diagnostic indices (for example, the index of regularity at the edges) come from the analysis of a single mole, without a general comparison with the other moles of the patient, while other indices (for example, the index of black sheep) are obtained from the comparison between the characteristics of a specific mole and the average characteristics of the distribution of recognized moles.
- Final segmentation of the model, implemented on the basis of the vector of diagnostic indices. It should be noted that the doctor can choose between a fully automatic segmentation and a semi-automatic segmentation. The choice can be made by the doctor in each specific visit. A comparison with the available index database 28 leads to the recognition of the suspicious moles. These moles will be subjected to further investigations on the basis of both the obtained values and final decision by the doctor. The doctor may also request the list of the P more suspicious moles on the basis of the obtained indices (for example, P may be chosen equal to 20), or may request, in a similar way, the list of the fraction F of the most suspicious moles on the basis of the calculated indices (for example, F can be chosen equal to 0.05, i.e. 5%). However, these choices are still made by the doctor.

The whole set of recognized positions and data 32 can be immediately consulted by the doctor who can thus have an objective feedback.

In particular, the decision block "need for further analysis" 34 is strictly dependent on the above described segmentation and recognition procedure 26, since this need is related to the recognition of a mole as a possible melanoma. This functional block is implemented directly by the doctor on the basis of his / her expertise as well as on the results of the automated diagnostic support process which is the subject-matter of the proposed invention.

If the doctor decides for the dermatoscopic examination and / or the biopsy (block 36) of a suspicious mole, this mole is subjected to analysis with dermatoscope and / or surgical removal and biopsy in order to verify if the suspicion is confirmed. The data obtained by dermatoscopy and / or biopsy will be associated with the previously obtained data to give the final output data set 38, for example in DICOM format.

It is emphasized that decision block 34 and dermatoscopy and / or biopsy block 36 use data provided by the proposed mapping method, but are not part of this method and are not implemented by means of the proposed apparatus. The decision block 34 about the possible need for further diagnostic tests is essentially based on the interpretation by the doctor of the data provided by the proposed mapping system. Moreover, the implementation of the dermatoscopic examination and / or biopsy, when necessary, involves other equipment. For this purpose, the dotted line in Figure 1 delimits the operations carried out according to the above described mapping method and the data directly supplied by the apparatus according to the invention.

It should be noted that the stage of melanoma recognition 26 requires the availability of a database of diagnostic indices 28 built on the basis of data supplied both by medical literature and by diagnostic practice. Nowadays some databases are already available; they should be associated and homogenized in order to allow their immediate use. Moreover, it should be emphasized that each user of the proposed system (i.e. doctor) can, through his own clinical practice, contribute to the enrichment of the database, which therefore has a dynamic character. The construction of the database and its subsequent update are implemented through learning procedures based on SVM (support vector machine). The availability of this database makes it possible to weigh the contributions of individual diagnostic indices in the recognition of suspicious moles.

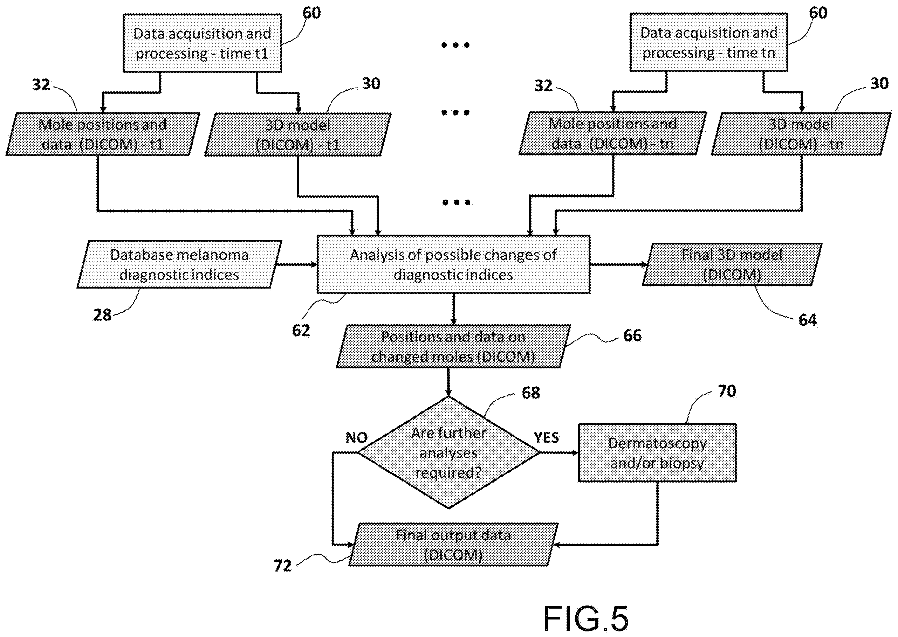

Figure 5 represents the flowchart of the mapping method in the case of a series of multitemporal acquisitions. In this case, the following functional blocks are identified:
- Data acquisition and processing block 60. The acquisition and processing times are *tₖ (k* = 1, 2, ..., n, with n ≥ 2). Each of the said blocks 60 comprises all the steps above described for the single acquisition and implemented in the proposed apparatus (this apparatus will be described in detail below) . Therefore, the output data for each data acquisition and processing block 60 at time *tₖ* are:
   - the 3D model of the skin 30 textured with data in visible band (RGB), IR thermal (contrast of temperature or contrast of temperature and time constant of recovery of the initial temperature after thermal stimulus) with the two additional levels: moles and suspicious moles;
   - the set of positions and data 32 that characterizes the recognized suspicious moles, constituted, for each of them, by the local 2.5D model of the suspicious moles and the values of the computed diagnostic indices (indices of asymmetry, regularity of the edges, color, size, elevation, black sheep, thermographic data).

All the data provided by the data acquisition and processing blocks 60 are referred to the same reference frame, integral with the initial position of the proposed detection apparatus. This allows a comparison between multitemporal data to evaluate the evolution of melanoma indicators over time.
- Analysis of the evolution of melanoma indicators block, 62. This block compares all acquired multitemporal data, also taking into account the information provided by the melanoma index database 28. In the event that one or more diagnostic indices related to a mole are changed, it is automatically implemented the detailed analysis of any possible changes in shape, color, surface and thermal response of this mole, so as to recognize any conditions of the occurrence of disease and evaluate its evolution over time. This analysis block 62 provides these output data:
   - the total 3D model 64, i.e. the geometric model textured with RGB, IRT, "mole" and "suspicious mole" levels. In the case where the studied area has limited size and concerns only one side of the patient, the 3D model could be replaced by a 2.5D model referred to a vertical plane. Such a 2.5D model could also be represented by an orthophoto;
   - a set of positions and data about the modified moles 66 that define the characteristics of suspicious moles.

The evolution analysis block 62 can be implemented by means of programs written in Python or MATLAB installed in the Command and Control Unit of the proposed apparatus.
- Decision block "need for further analysis" 68. As in the case of direct acquisition, it is actually implemented by the doctor on the basis of both his / her expertise and the results provided by the previous block. The proposed system highlights the moles affected by significant variations of one or more diagnostic indices and that, therefore, can be considered as suspicious. These suspicious moles require an evaluation and a decision by the doctor;
- Block "dermatoscopy and / or biopsy" 70. Like the case of direct acquisition, this functional block is implemented externally in order to verify if a suspicious mole actually is a melanoma or not.

The input data and final output data 38, 72 are preferably in DICOM format, both in the case of direct acquisition and in the case of multitemporal acquisitions, in order to allow a complete interfacing of the proposed system with other medical imaging systems. It is important to point out that, in general, the fusion and synthesis of images provided by different types of sensors can provide models of great significance for diagnostic purposes. For this reason, the project plans to provide a textured and photorealistic model that can be co-registered with any 3D models obtained by means of other techniques.

The proposed system allows the definition of a suitable reference frame for the management of multitemporal data and, at the same time, a quick and safe comparison between multitemporal data, with the exclusion of false positives induced by local deformation of the skin. According to this aspect of the invention, the comparison of the data obtained at different times is carried out, for a given homogeneous portion of skin (for example: thorax, back, the side of a leg), or even for an entire side of the patient, provided that it is compatible with 2.5D modeling, by means of the following operations:
- generating, for each observation session, the 2.5D model of the skin portion or the considered side of the body;
- recognizing the moles, on each of these multitemporal models, with the above described mapping method;
- establishing a correspondence between the moles of a 2.5D model and the moles of the other 2.5D models;
- evaluating, for each mole, the time history of its successive positions;
- calculating the strain field the skin on the basis of the time histories of the mole positions, constraining the results to the initial and final 2.5D models;
- analyzing the strain field in homogeneous zones in order to distinguish between mole growth and skin deformation / tension.

In one embodiment, the correspondences between the moles of a 2.5D model and the moles or other 2.5D models also takes into account the mutual positions of the mole clusters in the cases where there are moles in similar positions or new moles have formed in positions similar to those of existing moles.

Therefore, if necessary, at least the size index and the asymmetry index are corrected on the basis of the strain field analysis.

If necessary, already recognized and classified moles are reclassified on the basis of the recalculated size index and asymmetry index (or other recalculated indices) .

Moreover, in one embodiment, the comparison of the data obtained at different times is carried out by making a subdivision of the entire surface of the patient's skin in at least three parts according to cross sections with suitable vertical planes and by performing the 2.5D modeling for two or more of those parts. The subdivision into three or more parts, rather than the minimum possible (2 parts) is motivated by the need to correctly represent the areas that would otherwise be projected onto the reference planes at high angles and, therefore, with insufficient precision.

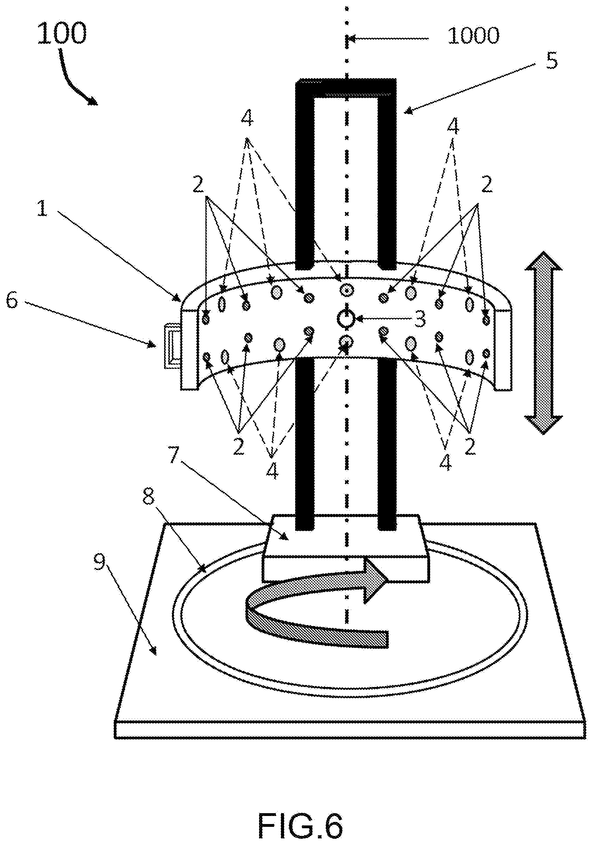

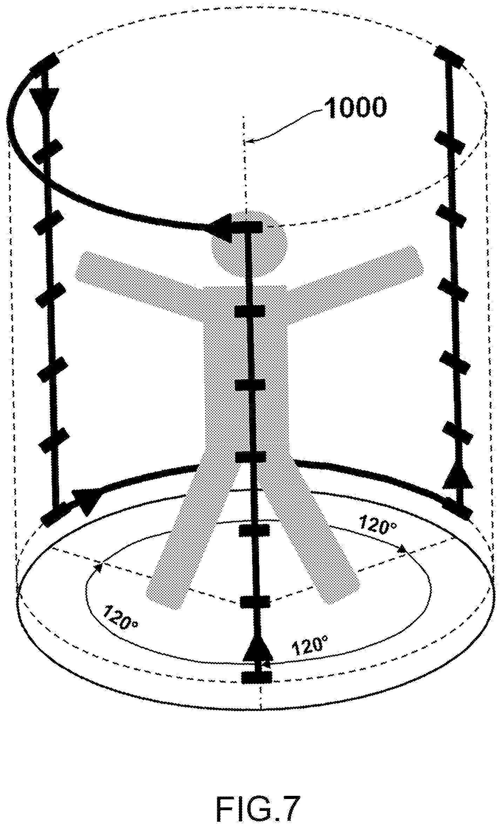

An apparatus 100 conceived in order to implement the above described mapping method is described below, with reference to Figures 6 and 7.

The apparatus 100 comprises:
- a Mobile Photographic Unit (MPU), labelled with "1" in Fig. 6; on the MPU these components are located:
   - some digital cameras 2 operating in visible band (a purely indicative number of cameras is, e.g., 12), positioned so as to cover the exposed side of the patient 500 (shown schematically in Figure 7);
   - at least one thermal imaging camera 3, positioned for example in an central position on the MPU;
   - some (e.g. ten) lighting lamps 4 arranged in positions such as to guarantee a diffused light;
   - a camera and thermal camera controller, equipped with a GigE interface, that communicates with the CCU (this element is not visible in Fig. 6 because it is inside the MPU case).

The MPU 1 is a semi-circular horizontal element, with a radius of 1 m, suitable for the surveying and modeling of a portion of the height of about 40 cm of the exposed side of the patient's body (which must be standing up if the whole body is scanned, while it may be sitting in the case of a scan of back and / or chest).
- A vertical guide, 5, with the shape of a upside down U (later on called U-guide), about 2.2 m in height, along which the MPU can slide in order to scan an entire side of the patient. The movement of the MPU along the U-guide 5 can take place with an electric control with a rack system (a rack for each column of the guide), and this in order to perform the scans in a completely automatic way on a sequence of predefined positions. The MPU can also be manually moved through a handle 6. The actual position of the MPU at the time of image acquisition is acquired and transmitted to the Command and Control Unit to identify the corresponding approximate positions of each camera and then initialize the procedure of photogrammetric modeling and provide the scale factor to the photogrammetric model.
- A base 7 of the U-guide 5. This base 7 is provided with wheels and slides along a circular guide 8, of radius 1 m, positioned on the base 9 of the entire apparatus 100, in order to allow the rotation of the entire MPU 1 around the axis of rotation 1000 and therefore to allow the scan of both sides of the patient 500. The patient's axis coincides with the mentioned axis of rotation 1000. An example of the possible positions of the center of mass of the MPU 1 for the automatic scanning of the entire body of a patient whose height is m 1.60-1.70 is shown in Fig. 7. For example, three positions angularly distanced by 120° from each other are provided for the U-guide 5. This in order to guarantee a wide overlap of the areas acquired by at least some cameras. For each angular position, 7 vertical positions of the MPU are considered. The measurement session provides 252 images in visible band and 21 thermographic images in case of thermal measurements of the static type. Since the photographic images are acquired at the same time by devices with acquisition rates of about 1-5 ms, the survey time is constrained by the thermal data acquisition time. In the case of simple thermal contrast measurement (static thermographic measurements), the data acquisition time is the integration time of the thermal imager (typically 20 ms). Under such conditions, the entire patient's skin can therefore be observed in about 7 minutes. In the case of dynamic measurements a significantly longer acquisition time is necessary. This because an evaluation of the time constant of the temperature decay (i.e. of the recovery of the initial temperature) is needed. The time necessary for the application of the thermal stimulus and the execution of some measures during the transient is to be considered. The acquisition of less extensive parts will be proportionally faster.
- The command and control unit, CCU (not shown in Fig. 6). The CCU is equipped with a graphical user interface (GUI) for the unified management of the entire measurement session: planning, execution, data processing, visualization, saving and possible transmission of results for remote diagnosis.

The CCU interacts with the camera controller, for example via a GigE interface, and includes the code required to perform all the data processing, namely: image processing and generation of the textured 3D model in visible band, processing of thermographic data and their fusion with the data in visible band, normalization of the chromatic levels of the images based on the mutual position between cameras and observed surface, segmentation of the textured digital model, recognition of all the moles and calculation of the corresponding diagnostic indices, automatic consultation of the database of diagnostic indices, detection of potentially suspicious moles and, finally, model texturing with the position and characteristics of these suspicious skin lesions. In the case of multitemporal measurement sessions, the CCU compares all the data obtained for the same patient.

In addition, the CCU can carry out the texturing of the model with data provided by different imaging techniques (for example, radiographic data) and stored in files in DICOM format.

The CCU is, for example, equipped with a touch screen that allows the doctor to navigate within the 3D models in order to verify and / or integrate what is obtained from the diagnostic system.

In one embodiment, the CCU provides the data obtained from the elaborations in DICOM format. In particular, the output data are:
- textured digital models, in which all the recognized moles are highlighted and their characteristics are shown as textures;
- maps (3D and 2D maps. The 2D maps are additional data provided in addition to benefit the laboratories without systems of 3D visualization and navigation) with the positions of all the suspicious moles and all the data that justify the recognition as suspicious lesions. The doctor can add his /her notes on these maps;
- data useful for the purpose of updating the database of diagnostic indices of melanoma by using SVM.

In one embodiment, the CCU is equipped with an interface to allow the system to communicate, even in real time, with other diagnostic systems, also for telediagnosis purposes.

In one embodiment, the CCU is a desktop having a case of appropriate size, suitable for use in a medical clinic, equipped with a touch screen and a mouse, were the software related to above mentioned processes is installed and executed.

### Example of mapping a skin portion of a patient

As an example, the case of a patient characterized by the extensive presence of moles on the skin of her back and shoulders is shown.

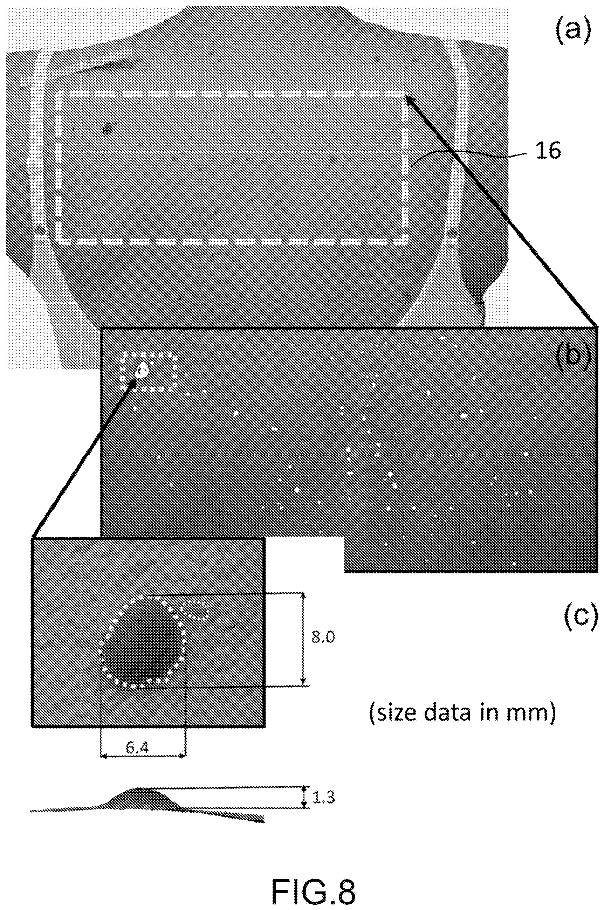

Figure 8a represents the 3D model 16 obtained by photographic survey and subsequent photogrammetric modeling, represented by means of an orthophoto referred to a vertical plane. The acquired images were ten, obtained by means of a single photographic camera moved to five successive angular positions, arranged along a semi-circumference, on two vertical levels. The model is metric thanks to a correct scale factor defined on the basis of the camera positions. The camera is a Canon EOS 6D, with a focal length of 50 mm, f/10, exposure time of 10 ms for each image, sensitivity of ISO-200, average acquisition distance about 1.20 m. The spatial resolution of the obtained model is about 0.7 mm. A diffused lighting system was used to simulate the 10-lamp system planned for the MPU.

The obtained model can be inspected by the doctor, if necessary also under telediagnosis conditions. He / she can change the virtual point of view and "navigate" on the model surface in order to study in detail a single mole or a small cluster of skin lesions or also can have a global view of the overall conditions of the skin from greater distance. The doctor can also take distance or volume measurements.

Figure 8b shows a selected area of the patient's skin (the contour of the selected area is indicated in Fig. 8a), on which the positions of all the recognized moles are highlighted in white. For each mole, a local 2.5D model is provided and information about its position in an external reference system, shape and color is also provided in order to evaluate the melanoma diagnostic indices.

Figure 8c shows the local 2.5D model of a detected mole, whose surrounding area is indicated in Fig. 8b. The local model allows to evaluate the contrast of color with respect to the surrounding skin, the shape of its edge and the detailed shape of the raised part. The position of the reference plane of the model is memorized in order to allow future analyses aimed at assessing the possible evolution over time of the recognized mole. It should be noted that the generation of a local 2.5D model allows the use of all the usual methods of both image processing and geometric analysis. In particular, the proposed modeling allows the calculation of the volume with respect to a local surface model of the skin unaffected by lesions. Moreover, it allows the generation of cross sections of the studied mole parallel or perpendicular to the reference plane of the local 2.5D model.

In particular, Figure 8c, shows two views of the 2.5D model of the selected mole, with some significant size data (axis lengths and mole thickness). The recognized mole edge is highlighted. In the vicinity of this mole, there is a further pigmented area having smaller size and negligible elevation. Therefore, the edge of this second mole is highlighted in a different way.

## Claims

1. A Three-dimensional mapping method of a patient's skin aimed at supporting the diagnosis of melanoma, comprising the steps of:
- receiving a plurality of photographic images and thermographic images of a skin portion from an acquisition apparatus comprising at least one digital camera operating in the visible band and at least one thermal camera;
- performing a photogrammetric modeling of the photographic images in order to generate a photorealistic point cloud and a photorealistic 3D model of the skin portion;
- performing an elaboration of the data related to the thermographic images and the photorealistic point cloud, in order to associate a thermal information to every point of this photorealistic point cloud;
- combining the photorealistic 3D model with the photorealistic point cloud provided with thermal data, in order to generate a photorealistic 3D model provided with thermal data,
wherein the photogrammetric modeling includes a step of normalization and homogenization of the color data of the points of the photorealistic cloud, in order to generate a point cloud and a 3D model with normalized and homogenized chromatic data, said normalization and homogenization step including the sub-steps of:
- performing a color pre-correction based on the spectral power distribution of the used lighting lamps;
- performing a final color correction, based on the comparison of the acquired data with the color of artificial targets, having known spectral response, positioned on the skin surface in distributed positions with respect to the portion of skin to be mapped, wherein the thermographic data processing step includes a data acquisition from the thermal camera and transformation of said data into a thermal image defined by a gray level matrix,
wherein the thermographic data processing step further comprises the sub-steps of:
- 2D projection of the photorealistic point cloud according to the thermal camera's line of sight, in order to obtain:
- a photorealistic image, IPC, corresponding to the visible band image of the observed subject that would be obtained through a camera with the same point of view of the thermal camera and whose color levels are those of the points of the projected point cloud;
- a matrix of partial point clouds, MPC, such that each *MPChk* element of this matrix consists of all the points of the photorealistic point cloud which are projected onto the same pixel *hk* of the IPC image;
- 2D co-registration of the thermal image and the IPC image, so that each pixel of the thermal image has the same position, in the reference frame of the IPC image, of the area to which it corresponds;
- texturing of the photorealistic image, IPC, by assigning to each pixel *IPChk* of the IPC image the value, if it exists, of the corresponding pixel of the thermal image, in order to obtain an IPC image texturized with the thermal datum, IPCTT;
- de-projection of the IPCTT image, on the basis of the MPC matrix data, in order to obtain the photorealistic point cloud provided with thermal data; the method further includes a thermal recalibration step of said gray level matrix, comprising the sub-steps of:
- searching, for each pixel of the matrix, the corresponding area of the point cloud;
- locally modeling this area of the point cloud, and possibly a surrounding area within a predetermined search radius, in order to recognize the local normal unit vector to the observed area;
- computing the angle between the direction of the normal unit vector and the line of sight of the thermal camera and then correcting the material emissivity for the specific pixel on the basis of this angle;
in which the values of emissivity of the pixels are used as corrective factors to be applied to the equations, provided by the camera manufacturer, which links the matrix of 16-bit integers provided by the camera itself (the "Raw thermal image"), the physical conditions of the environment, the physical characteristics of the observed material and the conditions of observation to the actual temperature of the observed portion of the skin surface, in order to obtain a thermally recalibrated IPCTT image.

2. Mapping method according to claim 1, in which the thermal data is the temperature in the thermal infrared band or represents the temperature difference between the temperature of a point belonging to a mole and the temperature of an area outside this skin lesion, in which the thermal data further comprises a time constant of the temperature decay after the application of a thermal stimulus to the skin lesion.

3. Mapping method according to anyone of the previous claims, wherein the skin portion is represented by a 2.5D model of the channel V, and wherein the moles are recognized as areas which satisfy the condition *Vₕₖ < V_{hk,FIT} -*2σ*ₖ*, where *Vₕₖ* is the punctual value of channel V, *V_{hk,FIT}* is the value corresponding to the modeled V surface and *σₖ* is the local dispersion of the V parameter.

4. Mapping method according to anyone of the previous claims, further comprising a step of generating a local 2.5D model of each detected mole, the 2.5D model being texturized with data in the visible band and in the thermal infrared band and is **characterized by** the position and orientation of its reference plane so as to allow possible comparisons with future data.

5. Mapping method according to anyone of the previous claims, in which the asymmetry index is obtained by finding the mole centroid and determining, by means of diagonalization of the correlation matrix of the positions of the points constituting the mole itself, the corresponding principal axes, the asymmetry index *I_{A}* being obtained by calculating the differences between the areas corresponding to the four mole quadrants thus obtained, and in which the edge regularity index is calculated by finding the mole centroid and determining, by means of diagonalization of the correlation matrix of the positions of the points of the moles itself, the corresponding principal axes, dividing the whole circle angle around the centroid into N values *θₙ =* 360*n*/*N*, where *n*= 0,1,···,*N*-1. Let *pₖ=p*(*θₖ*) be the distance between the centroid and the edge of the nevus corresponding to the angle *θₖ* and let *Rₙ* be the radius of the circumference *Γₙ* fitted, by means of a least squares process, to the 2M+1 points of mole edge having polar coordinates (*θₖ*,*pₖ*) , with *k = n-M*,*n-M+*1,...,*n+M*, the index of edge regularity being calculated as ${I}_{RB} = \sqrt{{\sum }_{n = 0}^{N - 1} {\sum }_{k = n - M}^{n + M} {\left({p}_{k}/{R}_{k}-1\right)}^{2}} / N$, i.e. it is the normalized root mean squared difference between the edge and the circumference locally fitted to the data.

6. Mapping method according to anyone of the previous claims, wherein the color index is obtained by means of an initial transformation of the RGB image which contains the radiometric information of the 2.5D mole model { (*xₖ,yₖ, zₕₖ,* RGB*ₕₖ*)}, where z*ₕₖ* = *z*(*xₖ,yₕ*) is the elevation and RGB*ₕₖ* = RGB(*xₖ,yₕ*) is the color of the grid element *hk* defined on a plane parallel to the local arrangement of the skin, i.e. the image whose value of the pixel *hk* is the RGB*ₕₖ* vector, into an indexed image, i.e. a gray level image having the same size of the initial image but with *n* possible levels, and subsequent evaluation of the statistical distribution of the levels themselves, wherein the color index is defined as zero if the distribution is unimodal (state of non-suspicious mole), is defined equal to 0.5 if the distribution is bimodal (state of moderately suspicious mole), and is defined equal to 1 if the distribution is multimodal with three or more modes (state of strongly suspicious mole).

7. Mapping method according to anyone of the previous claims, in which the size index is obtained by calculating the equivalent radius $R = \sqrt{S / π}$, where *S* is the surface area of the mole.

8. Mapping method according to any one of the previous claims, in which the method is repeated for the data acquired at different times (multitemporal observations), and in which the diagnostic indices calculated at each observation time are compared with each other in order to detect any variations of at least one of these diagnostic indices.

9. Mapping method according to the previous claim, in which the comparison of the data obtained at different times is carried out, for a given homogeneous portion of skin (for example: thorax, back, the side of a leg), or also for an entire patient side, provided that it is compatible with 2.5D modeling, by means of the following operations:
- generating, for each observation session, the 2.5D model of the considered skin portion or body side;
- identifying, on each of these models, the moles recognized by the mapping method according to any one of the claims 5-8;
- establishing a correspondence between the moles of a 2.5D model and the other moles;
- evaluating, for each mole, the time history of its successive positions;
- calculating the strain field on the basis of the time histories of the mole positions and constraining the results to the initial and final 2.5D models;
- analyzing the strain field in homogeneous zones in order to distinguish between mole growth and deformation / tension of the skin.

10. Mapping method according to the previous claim, in which the correspondences between the moles on a 2.5D model and the moles on the other 2.5D models are also obtained on the basis of the mutual positions of moles clusters in the cases where there are several moles in similar positions or new moles have formed in positions similar to those of existing moles.

11. Mapping method according to claim 9 or 10, in which, at least the size index and the asymmetry index are corrected on the basis of the strain field data, and in which the recognized moles are reclassified on the basis of the recalculation of at least the size index and the asymmetry index.

12. Mapping method according to any of the claims 9-11, in which the comparison of the data obtained at different times is carried out by making a subdivision of the whole surface of the patient's skin in at least three parts according to cross sections with vertical planes of suitable position and performing the 2.5D modeling for two or more of these parts.

13. Apparatus for performing a three-dimensional mapping of a portion of a patient's skin, comprising:
- a mobile photographic unit, MPU, comprising at least one, preferably a plurality of digital cameras operating in visible band and positioned so as to observe all the exposed side of the patient;
- at least one thermal camera;
- lighting lamps arranged in positions such as to guarantee a diffused light; and
- a command and control unit, CCU, able to receive data from the mobile photographic unit and the thermal camera and programmed in order to implement the mapping method according to any one of the previous claims, wherein the mobile photographic unit has a substantially semicircular shape with a vertical axis and can be moved in height along a vertical guide so as to carry out a scan of the portion of skin to be mapped, the actual height position of the effective mobile photographic unit at the time of each image acquisition being acquired and transmitted to the command and control unit, in which the vertical guide of the mobile photographic unit can be moved along a circular guide having vertical axis in order to allow a rotation of this mobile photographic unit around the patient.

## Patentansprüche

1. Dreidimensionales Abbildungsverfahren der Haut eines Patienten zur Unterstützung der Diagnose von Melanomen, umfassend die Schritte:
- Empfangen einer Vielzahl von fotografischen Bildern und thermografischen Bildern eines Hautabschnitts von einer Erfassungsvorrichtung, die mindestens eine im sichtbaren Band arbeitende Digitalkamera und mindestens eine Wärmebildkamera umfasst;
- Durchführen einer photogrammetrischen Modellierung der fotografischen Bilder, um eine fotorealistische Punktwolke und ein fotorealistisches 3D-Modell des Hautabschnitts zu erzeugen;
- Durchführen einer Ausarbeitung der auf die thermografischen Bilder und die fotorealistische Punktwolke bezogenen Daten, um jedem Punkt dieser fotorealistischen Punktwolke eine thermische Information zuzuordnen;
- Kombinieren des fotorealistischen 3D-Modells mit der mit thermischen Daten versehenen fotorealistischen Punktwolke, um ein mit thermischen Daten versehenes fotorealistisches 3D-Modell zu erzeugen,
wobei die photogrammetrische Modellierung einen Schritt der Normalisierung und Homogenisierung der Farbdaten der Punkte der fotorealistischen Wolke umfasst, um eine Punktwolke und ein 3D-Modell mit normalisierten und homogenisierten chromatischen Daten zu erzeugen, wobei der Normalisierungs- und Homogenisierungsschritt die folgenden Teilschritte umfasst:
- Durchführen einer Farbvorkorrektur basierend auf der spektralen Leistungsverteilung der verwendeten Beleuchtungslampen;
- Durchführen einer endgültigen Farbkorrektur basierend auf dem Vergleich der erfassten Daten mit der Farbe von künstlichen Zielen mit bekannter Spektralantwort, die auf der Hautoberfläche an in Bezug auf den abzubildenden Hautabschnitt verteilten Positionen positioniert sind, wobei der Verarbeitungsschritt der thermografischen Daten eine Datenerfassung von der Wärmebildkamera und eine Transformation dieser Daten in ein durch eine Graustufenmatrix definiertes Wärmebild umfasst,
wobei der Verarbeitungsschritt der thermografischen Daten ferner die folgenden Teilschritte umfasst:
- 2D-Projektion der fotorealistischen Punktwolke gemäß der Sichtlinie der Wärmebildkamera, um Folgendes zu erhalten:
- ein fotorealistisches Bild, IPC, das dem Bild im sichtbaren Band des beobachteten Subjekts entspricht, das durch eine Kamera mit demselben Blickpunkt wie die Wärmebildkamera erhalten würde und dessen Farbstufen diejenigen der Punkte der projizierten Punktwolke sind;
- eine Matrix von Teilpunktwolken, MPC, derart, dass jedes *MPChk*-Element dieser Matrix aus allen Punkten der fotorealistischen Punktwolke besteht, die auf dasselbe Pixel *hk* des IPC-Bildes projiziert werden;
- 2D-Koregistrierung des Wärmebildes und des IPC-Bildes, so dass jedes Pixel des Wärmebildes im Bezugssystem des IPC-Bildes dieselbe Position hat wie der Bereich, dem es entspricht;
- Texturierung des fotorealistischen Bildes, IPC, indem jedem Pixel *IPChk* des IPC-Bildes der Wert, falls vorhanden, des entsprechenden Pixels des Wärmebildes zugewiesen wird, um ein mit den thermischen Daten texturiertes IPC-Bild, IPCTT, zu erhalten;
- Deprojektion des IPCTT-Bildes auf der Grundlage der MPC-Matrixdaten, um die mit thermischen Daten versehene fotorealistische Punktwolke zu erhalten;
wobei das Verfahren ferner einen thermischen Rekalibrierungsschritt der Graustufenmatrix umfasst, der die folgenden Teilschritte umfasst:
- Suchen des entsprechenden Bereichs der Punktwolke für jedes Pixel der Matrix;
- lokales Modellieren dieses Bereichs der Punktwolke und möglicherweise eines umgebenden Bereichs innerhalb eines vorbestimmten Suchradius, um den lokalen Normaleneinheitsvektor zu dem beobachteten Bereich zu erkennen;
- Berechnen des Winkels zwischen der Richtung des Normaleneinheitsvektors und der Sichtlinie der Wärmebildkamera und anschließendes Korrigieren des Emissionsgrads des Materials für das spezifische Pixel auf der Grundlage dieses Winkels;
wobei die Werte des Emissionsgrads der Pixel als Korrekturfaktoren verwendet werden, die auf die von dem Kamerahersteller bereitgestellten Gleichungen anzuwenden sind, welche die von der Kamera selbst bereitgestellte Matrix von 16-Bit-Ganzzahlen (das "rohe Wärmebild"), die physikalischen Bedingungen der Umgebung, die physikalischen Eigenschaften des beobachteten Materials und die Beobachtungsbedingungen mit der tatsächlichen Temperatur des beobachteten Abschnitts der Hautoberfläche verknüpfen, um ein thermisch rekalibriertes IPCTT-Bild zu erhalten.

2. Abbildungsverfahren nach Anspruch 1, wobei die thermischen Daten die Temperatur im thermischen Infrarotband sind oder den Temperaturunterschied zwischen der Temperatur eines zu einem Muttermal gehörenden Punktes und der Temperatur eines Bereichs außerhalb dieser Hautläsion darstellen, wobei die thermischen Daten ferner eine Zeitkonstante des Temperaturabfalls nach der Anwendung eines thermischen Reizes auf die Hautläsion umfassen.

3. Abbildungsverfahren nach einem der vorhergehenden Ansprüche, wobei der Hautabschnitt durch ein 2,5D-Modell des Kanals V dargestellt wird und wobei die Muttermale als Bereiche erkannt werden, welche die Bedingung *Vₕₖ* < V*h_{k,FIT-}* 2σ*ₖ* erfüllen, wobei *Vₕₖ* der punktuelle Wert des Kanals V ist, *V_{hk,FIT}* der der modellierten V-Oberfläche entsprechende Wert ist und σ*ₖ* die lokale Dispersion des V-Parameters ist.

4. Abbildungsverfahren nach einem der vorhergehenden Ansprüche, ferner umfassend einen Schritt des Erzeugens eines lokalen 2,5D-Modells jedes erkannten Muttermals, wobei das 2,5D-Modell mit Daten im sichtbaren Band und im thermischen Infrarotband texturiert ist und durch die Position und Ausrichtung seiner Referenzebene gekennzeichnet ist, um mögliche Vergleiche mit zukünftigen Daten zu ermöglichen.

5. Abbildungsverfahren nach einem der vorhergehenden Ansprüche, wobei der Asymmetrieindex durch Finden des Schwerpunkts des Muttermals und Bestimmen der entsprechenden Hauptachsen mittels Diagonalisierung der Korrelationsmatrix der Positionen der das Muttermal selbst bildenden Punkte erhalten wird, wobei der Asymmetrieindex *I_{A}* durch Berechnen der Differenzen zwischen den Flächen erhalten wird, die den vier so erhaltenen Muttermalquadranten entsprechen, und wobei der Randregelmäßigkeitsindex durch Finden des Schwerpunkts des Muttermals und Bestimmen der entsprechenden Hauptachsen mittels Diagonalisierung der Korrelationsmatrix der Positionen der Punkte des Muttermals selbst berechnet wird, wobei der Vollkreiswinkel um den Schwerpunkt in *N* Werte *θₙ* = 360 *n*/*N* unterteilt wird, wobei *n* = 0,1,...,*N*-1. Sei *pₖ = p(θₖ)* der Abstand zwischen dem Schwerpunkt und dem Rand des Nävus, der dem Winkel *θₖ* entspricht, und sei R*ₙ* der Radius des Umfangs *Γₙ*, der mittels eines Verfahrens der kleinsten Quadrate an die 2M+1 Punkte des Muttermalrandes mit Polarkoordinaten (*θₖ,pₖ*) angepasst wurde, wobei *k = n-M, n-M+1,...,n+M*, wobei der Index der Randregelmäßigkeit als ${I}_{RB} = \sqrt{{\sum }_{n = 0}^{N - 1} {\sum }_{k = n - M}^{n + M} {\left({p}_{k}/{R}_{k}-1\right)}^{2}} / N$ berechnet wird, d. h., er ist die normalisierte quadratische Mittelwertdifferenz zwischen dem Rand und dem lokal an die Daten angepassten Umfang.

6. Abbildungsverfahren nach einem der vorhergehenden Ansprüche, wobei der Farbindex mittels einer anfänglichen Transformation des RGB-Bildes, welches die radiometrischen Informationen des 2,5D-Muttermalmodells {(*xₖ, yₖ, zₕₖ, RGBₕₖ*)} enthält, wobei z*ₕₖ* = z(*xₖ,yₕ*) die Erhebung und RGB*ₕₖ* = RGB(*xₖ,yₕ*) die Farbe des Gitterelements *hk* ist, das auf einer Ebene parallel zur lokalen Anordnung der Haut definiert ist, d. h. des Bildes, dessen Wert des Pixels *hk* der Vektor RGB*ₕₖ* ist, in ein indiziertes Bild, d. h. ein Graustufenbild mit der gleichen Größe wie das ursprüngliche Bild, aber mit *n* möglichen Stufen, und anschließende Auswertung der statistischen Verteilung der Stufen selbst erhalten wird, wobei der Farbindex als Null definiert ist, wenn die Verteilung unimodal ist (Zustand eines unverdächtigen Muttermals), gleich 0,5 definiert ist, wenn die Verteilung bimodal ist (Zustand eines mäßig verdächtigen Muttermals), und gleich 1 definiert ist, wenn die Verteilung multimodal mit drei oder mehr Modi ist (Zustand eines stark verdächtigen Muttermals).

7. Abbildungsverfahren nach einem der vorhergehenden Ansprüche, wobei der Größenindex durch Berechnen des äquivalenten Radius $R = \sqrt{S / π}$ erhalten wird, wobei *S* die Oberfläche des Muttermals ist.

8. Abbildungsverfahren nach einem der vorhergehenden Ansprüche, wobei das Verfahren für zu unterschiedlichen Zeiten erfasste Daten wiederholt wird (multitemporale Beobachtungen) und wobei die zu jedem Beobachtungszeitpunkt berechneten diagnostischen Indizes miteinander verglichen werden, um etwaige Variationen mindestens eines dieser diagnostischen Indizes festzustellen.

9. Abbildungsverfahren nach dem vorhergehenden Anspruch, wobei der Vergleich der zu unterschiedlichen Zeiten erhaltenen Daten für einen gegebenen homogenen Hautabschnitt (zum Beispiel: Thorax, Rücken, die Seite eines Beins) oder auch für eine gesamte Patientenseite durchgeführt wird, sofern diese mit der 2,5D-Modellierung kompatibel ist, mittels der folgenden Vorgänge:
- Erzeugen des 2,5D-Modells des betrachteten Hautabschnitts oder der Körperseite für jede Beobachtungssitzung;
- Identifizieren der durch das Abbildungsverfahren nach einem der Ansprüche 5-8 erkannten Muttermale auf jedem dieser Modelle;
- Herstellen einer Korrespondenz zwischen den Muttermalen eines 2,5D-Modells und den anderen Muttermalen;
- Auswerten des zeitlichen Verlaufs der aufeinanderfolgenden Positionen für jedes Muttermal;
- Berechnen des Verzerrungsfeldes auf der Grundlage der zeitlichen Verläufe der Muttermalpositionen und Einschränken der Ergebnisse auf das anfängliche und das endgültige 2,5D-Modell;
- Analysieren des Verzerrungsfeldes in homogenen Zonen, um zwischen Muttermalwachstum und Deformation/Spannung der Haut zu unterscheiden.

10. Abbildungsverfahren nach dem vorhergehenden Anspruch, wobei die Korrespondenzen zwischen den Muttermalen auf einem 2,5D-Modell und den Muttermalen auf den anderen 2,5D-Modellen auch auf der Grundlage der gegenseitigen Positionen von Muttermal-Clustern in den Fällen erhalten werden, in denen mehrere Muttermale an ähnlichen Positionen vorhanden sind oder sich neue Muttermale an Positionen gebildet haben, die denen bestehender Muttermale ähnlich sind.

11. Abbildungsverfahren nach Anspruch 9 oder 10, wobei zumindest der Größenindex und der Asymmetrieindex auf der Grundlage der Verzerrungsfelddaten korrigiert werden und wobei die erkannten Muttermale auf der Grundlage der Neuberechnung zumindest des Größenindexes und des Asymmetrieindexes neu klassifiziert werden.

12. Abbildungsverfahren nach einem der Ansprüche 9-11, wobei der Vergleich der zu unterschiedlichen Zeiten erhaltenen Daten durchgeführt wird, indem eine Unterteilung der gesamten Hautoberfläche des Patienten in mindestens drei Teile gemäß Querschnitten mit vertikalen Ebenen geeigneter Position vorgenommen wird und die 2,5D-Modellierung für zwei oder mehr dieser Teile durchgeführt wird.

13. Vorrichtung zur Durchführung einer dreidimensionalen Abbildung eines Abschnitts der Haut eines Patienten, umfassend:
- eine mobile fotografische Einheit, MPU, umfassend mindestens eine, vorzugsweise eine Vielzahl von im sichtbaren Band arbeitenden Digitalkameras, die so positioniert sind, dass sie die gesamte exponierte Seite des Patienten beobachten;
- mindestens eine Wärmebildkamera;
- Beleuchtungslampen, die in solchen Positionen angeordnet sind, dass sie ein diffuses Licht garantieren; und
- eine Befehls- und Steuereinheit, CCU, die in der Lage ist, Daten von der mobilen fotografischen Einheit und der Wärmebildkamera zu empfangen, und programmiert ist, um das Abbildungsverfahren nach einem der vorhergehenden Ansprüche zu implementieren, wobei die mobile fotografische Einheit eine im Wesentlichen halbkreisförmige Form mit einer vertikalen Achse aufweist und in der Höhe entlang einer vertikalen Führung bewegt werden kann, um einen Scan des abzubildenden Hautabschnitts durchzuführen, wobei die tatsächliche Höhenposition der effektiven mobilen fotografischen Einheit zum Zeitpunkt jeder Bilderfassung erfasst und an die Befehls- und Steuereinheit übertragen wird, wobei die vertikale Führung der mobilen fotografischen Einheit entlang einer kreisförmigen Führung mit vertikaler Achse bewegt werden kann, um eine Drehung dieser mobilen fotografischen Einheit um den Patienten herum zu ermöglichen.

## Revendications

1. Procédé de cartographie tridimensionnelle de la peau d'un patient visant à soutenir le diagnostic du mélanome, comprenant les étapes suivantes :
- recevoir une pluralité d'images photographiques et d'images thermographiques d'une partie de peau à partir d'un appareil d'acquisition comprenant au moins une caméra numérique fonctionnant dans la bande visible et au moins une caméra thermique ;
- réaliser une modélisation photogrammétrique des images photographiques afin de générer un nuage de points photoréaliste et un modèle 3D photoréaliste de la partie cutanée ;
- réaliser un traitement des données liées aux images thermographiques et au nuage de points photoréaliste, afin d'associer une information thermique à chaque point de ce nuage de points photoréaliste ;
- combiner le modèle 3D photoréaliste avec le nuage de points photoréaliste pourvu de données thermiques, afin de générer un modèle 3D photoréaliste pourvu de données thermiques,
dans lequel la modélisation photogrammétrique comprend une étape de normalisation et d'homogénéisation des données de couleur des points du nuage photoréaliste, afin de générer un nuage de points et un modèle 3D avec des données chromatiques normalisées et homogénéisées, ladite étape de normalisation et d'homogénéisation comprenant les sous-étapes suivantes :
- réaliser une précorrection des couleurs sur la base de la distribution de puissance spectrale des lampes d'éclairage utilisées ;
- réaliser une correction de couleur finale, sur la base de la comparaison des données acquises avec la couleur de cibles artificielles, ayant une réponse spectrale connue, positionnées sur la surface de la peau dans des positions réparties par rapport à la partie de la peau à cartographier, dans lequel l'étape de traitement des données thermographiques comprend une acquisition de données à partir de la caméra thermique et une transformation desdites données en une image thermique définie par une matrice de niveaux de gris,
dans lequel l'étape de traitement des données thermographiques comprend en outre les sous-étapes suivantes :
- réaliser une projection 2D du nuage de points photoréaliste selon la ligne de visée de la caméra thermique, afin d'obtenir :
- une image photoréaliste, IPC, correspondant à l'image en bande visible du sujet observé qui serait obtenue à travers une caméra ayant le même point de vue de la caméra thermique et dont les niveaux de couleur sont ceux des points du nuage de points projeté ;
- une matrice de nuages de points partiels, MPC, telle que chaque élément MPChk de cette matrice soit constitué de tous les points du nuage de points photoréaliste qui sont projetés sur un même pixel hk de l'image IPC ;
- un calage 2D de l'image thermique et de l'image IPC, de sorte que chaque pixel de l'image thermique présente la même position, dans le repère de l'image IPC, que la zone à laquelle il correspond ;
- une texturisation de l'image photoréaliste, IPC, en attribuant à chaque pixel *IPChk* de l'image IPC la valeur, si elle existe, du pixel correspondant de l'image thermique, afin d'obtenir une image IPC texturisée avec la donnée thermique, IPCTT ;
- une déprojection de l'image IPCTT, sur la base des données de la matrice MPC, afin d'obtenir le nuage de points photoréaliste pourvu de données thermiques ; le procédé comprend en outre une étape de recalibrage thermique de ladite matrice de niveau de gris, comprenant les sous-étapes suivantes :
- rechercher, pour chaque pixel de la matrice, la zone correspondante du nuage de points ;
- modéliser localement cette zone du nuage de points, et éventuellement une zone environnante dans un rayon de recherche prédéterminé, afin de reconnaître le vecteur unitaire normal local à la zone observée ;
- calculer l'angle entre la direction du vecteur unitaire normal et la ligne de visée de la caméra thermique, puis corriger l'émissivité du matériau pour le pixel spécifique sur la base de cet angle ;
dans lequel les valeurs d'émissivité des pixels sont utilisées comme facteurs de correction à appliquer aux équations, fournies par le fabricant de la caméra, qui lient la matrice d'entiers de 16 bits fournie par la caméra elle-même (l '« image thermique brute »), les conditions physiques de l'environnement, les caractéristiques physiques du matériau observé et les conditions d'observation à la température réelle de la partie observée de la surface de la peau, afin d'obtenir une image IPCTT recalibrée thermiquement.

2. Procédé de cartographie selon la revendication 1, dans lequel les données thermiques sont la température dans la bande infrarouge thermique ou représentent la différence de température entre la température d'un point appartenant à un grain de beauté et la température d'une zone à l'extérieur de cette lésion cutanée, dans lequel les données thermiques comprennent en outre une constante de temps de la décroissance de la température après l'application d'un stimulus thermique sur la lésion cutanée.

3. Procédé de cartographie selon l'une quelconque des revendications précédentes, dans lequel la partie de peau est représentée par un modèle 2,5D du canal V, et dans lequel les grains de beauté sont reconnus comme des zones qui satisfont à la condition *Vₕₖ < V_{hk,FiT}-*2σ*ₖ*, où V*ₕₖ* est la valeur ponctuelle du canal V, V*_{hk,FiT}* est la valeur correspondant à la surface V modélisée et Ok est la dispersion locale du paramètre V.

4. Procédé de cartographie selon l'une quelconque des revendications précédentes, comprenant en outre une étape de génération d'un modèle 2,5D local de chaque grain de beauté détecté, le modèle 2,5D étant texturisé avec des données dans la bande visible et dans la bande infrarouge thermique et est **caractérisé par** la position et l'orientation de son plan de référence de manière à permettre d'éventuelles comparaisons avec des données futures.

5. Procédé de cartographie selon l'une quelconque des revendications précédentes, dans lequel l'indice d'asymétrie est obtenu en trouvant le centroïde du grain de beauté et en déterminant, au moyen de la diagonalisation de la matrice de corrélation des positions des points constituant le grain de beauté lui-même, les axes principaux correspondants, l'indice d'asymétrie Iₐ étant obtenu en calculant les différences entre les zones correspondant aux quatre quadrants de grain de beauté ainsi obtenus, et dans lequel l'indice de régularité des bords est calculé en trouvant le centroïde du grain de beauté et en déterminant, au moyen d'une diagonalisation de la matrice de corrélation des positions des points du grain de beauté lui-même, les axes principaux correspondants, divisant l'angle de cercle complet autour du centroïde en N valeurs *θₙ*=360*n*/*N*, où n = 0,l,...,N-l. Soit *pₖ = p(θₖ)* la distance entre le centroïde et le bord du nævus correspondant à l'angle *θₖ* et soit R*ₙ* le rayon de la circonférence Γ*ₙ* ajustée, au moyen d'un processus des moindres carrés, aux 2M+1 points du bord du grain de beauté ayant des coordonnées polaires (*θₖ,pₖ*) , avec k = n-M, n-M+l,...,n+M, l'indice de régularité des bords étant calculé comme ${I}_{RB} = \sqrt{{\sum }_{n = 0}^{N - 1} {\sum }_{k = n - M}^{n + M} {\left({p}_{k}/{R}_{k}-1\right)}^{2}} / N$, c'est-à-dire qu'il s'agit de la différence quadratique moyenne normalisée entre le bord et la circonférence ajustée localement aux données.

6. Procédé de cartographie selon l'une quelconque des revendications précédentes, dans lequel l'indice de couleur est obtenu au moyen d'une transformation initiale de l'image RVB qui contient les informations radiométriques du modèle de grain de beauté 2,5D {(*xₖ, yₖ, zₕₖ, RVBₕₖ*)}, où z*ₕₖ* = z(*xₖ,yₕ*) est l'élévation et RVB*ₕₖ* = RVB(*xₖ,yₕ*) est la couleur de l'élément de grille *hk* défini sur un plan parallèle à la disposition locale de la peau, c'est-à-dire la image dont la valeur du pixel *hk* est le vecteur RVB*ₕₖ*, dans une image indexée, c'est-à-dire une image de niveau de gris ayant la même taille que l'image initiale mais avec *n* niveaux éventuels, et évaluation ultérieure de la distribution statistique des niveaux eux-mêmes, dans lequel l'indice de couleur est défini comme étant égal à zéro la distribution est unimodale (état de grain de beauté non suspect), est défini comme étant égal à 0,5 si la distribution est bimodale (état de grain de beauté modérément suspect), et est défini comme étant égal à 1 si la distribution est multimodale avec trois modes ou plus (état de grain de beauté fortement suspect).

7. Procédé de cartographie selon l'une quelconque des revendications précédentes, dans lequel l'indice de taille est obtenu en calculant le rayon équivalent $R = \sqrt{S / π}$, où S est la surface du grain de beauté.

8. Procédé de cartographie selon l'une quelconque des revendications précédentes, dans lequel le procédé est répété pour les données acquises à différents instants (observations multitemporelles), et dans lequel les indices de diagnostic calculés à chaque instant d'observation sont comparés entre eux afin de détecter d'éventuelles variations d'au moins un de ces indices de diagnostic.

9. Procédé de cartographie selon la revendication précédente, dans laquelle la comparaison des données obtenues à différents moments est effectuée, pour une portion de peau homogène donnée (par exemple : le thorax, le dos, le côté d'une jambe), ou encore pour un côté patient entier, à condition qu'elle soit compatible avec la modélisation 2,5D, au moyen des opérations suivantes :
- générer, pour chaque séance d'observation, le modèle 2,5D de la partie de peau ou du côté du corps considéré ;
- identifier, sur chacun de ces modèles, les grains de beauté reconnus par le procédé de cartographie selon l'une quelconque des revendications 5 à 8 ;
- établir une correspondance entre les grains de beauté d'un modèle 2,5D et les autres grains de beauté ;
- évaluer, pour chaque grain de beauté, l'historique de ses positions successives ;
- calculer le champ de déformation sur la base des historiques temporels des positions des grains de beauté et contraindre les résultats aux modèles 2,5D initiaux et finaux ;
- analyser le champ de déformation dans des zones homogènes afin de distinguer la croissance molaire et la déformation / tension de la peau.

10. Procédé de cartographie selon la revendication précédente, dans lequel les correspondances entre les grains de beauté sur un modèle 2,5D et les grains de beauté sur les autres modèles 2,5D sont également obtenues sur la base des positions mutuelles de grappes de grains de beauté dans les cas où il y a plusieurs grains de beauté dans des positions similaires ou si de nouveaux grains de beauté se sont formés dans des positions similaires à celles des grains de beauté existants.

11. Procédé de cartographie selon la revendication 9 ou 10, dans lequel, au moins l'indice de taille et l'indice d'asymétrie sont corrigés sur la base des données de champ de déformation, et dans lequel les grains de beauté reconnus sont reclassés sur la base du recalcul d'au moins l'indice de taille et l'indice d'asymétrie.

12. Procédé de cartographie selon l'une quelconque des revendications 9 à 11, dans lequel la comparaison des données obtenues à différents moments est effectuée en effectuant une subdivision de la surface totale de la peau du patient en au moins trois parties selon des sections transversales avec des plans verticaux de position appropriée et en réalisant la modélisation 2,5D pour deux ou plusieurs de ces parties.

13. Appareil pour réaliser une cartographie tridimensionnelle d'une partie de la peau d'un patient, comprenant :
- une unité photographique mobile (en Anglais « mobile photographic unit » pour MPU), comprenant au moins une, de préférence une pluralité de caméras numériques fonctionnant en bande visible et positionnées de manière à observer tout le côté exposé du patient ;
- au moins une caméra thermique ;
- des lampes d'éclairage disposées dans des positions telles qu'elles garantissent une lumière diffuse ; et
- une unité de commande et de contrôle (en Anglais « command and control unit » pour CCU), apte à recevoir des données de l'unité photographique mobile et de la caméra thermique et programmée pour mettre en œuvre le procédé de cartographie selon l'une quelconque des revendications précédentes, dans laquelle l'unité photographique mobile a une forme sensiblement semi-circulaire avec un axe vertical et peut être déplacée en hauteur le long d'un guide vertical de manière à effectuer un balayage de la portion de peau à cartographier, la position réelle en hauteur de l'unité photographique mobile effective au moment de chaque acquisition d'image étant acquise et transmise à l'unité de commande et de contrôle, dans laquelle le guide vertical de l'unité photographique mobile peut être déplacé le long d'un guide circulaire ayant un axe vertical afin de permettre une rotation de cette unité photographique mobile autour du patient.
